(19) Europäisches Patentamt European Patent Office Office européen des brevets

(11) EP 4 390 518 A1

(12) EUROPEAN PATENT APPLICATION

(43) Date of publication:
26.06.2024 Bulletin 2024/26

(51) International Patent Classification (IPC):
G02C 7/02 (2006.01)

(21) Application number: 22306973.3

(22) Date of filing: 21.12.2022

(52) Cooperative Patent Classification (CPC):
G02C 7/022; G02C 2202/24

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Essilor International
94220 Charenton-Le-Pont (FR)

(72) Inventors:
• GUILLOT, Matthieu
92130 ISSY LES MOULINEAUX (FR)
• GACOIN, Eric
75020 PARIS (FR)
• HUGONNEAUX, Patrick
94500 Champigny-sur-Marne (FR)
• DUTRIEUX, Guillaume
94450 Limeil-Brevannes (FR)

(74) Representative: Jacobacci Coralis Harle
32, rue de l'Arcade
75008 Paris (FR)

(54) SPECTACLE LENS

(57) Spectacle lens comprising an arrangement of micro-optical elements, each micro-optical element having an micro-optical axis and a micro-optical face, said micro-optical face having a shape presenting the following characteristics :
- a first altitude first order gradient defined as a gradient of a distance from a section of the micro-optical face of the micro-optical element in a first axial plane to a micro-optical reference radial plane perpendicular to the micro-optical axis, and
- a second altitude first order gradient defined as a gradient of a distance from a section of the micro-optical face of the micro-optical element in a second axial plane to the micro-optical reference radial plane perpendicular to the micro-optical axis,
the first and second altitude first order gradients have each a maximum higher than 1.5 $\mu$m/mm in absolute terms and a minimum higher than 1.5 $\mu$m/mm in absolute value

Fig.4

EP 4 390 518 A1

(Cont. next page)

# Fig.8

**Description**

TECHNICAL FIELD OF THE INVENTION

The invention relates to a spectacle lens intended to be worn by an individual, said spectacle lens providing a macro-optical function comprising a spherical power and comprising micro-optical elements.

More precisely the invention relates to a spectacle lens having a specific design to reduce the myopia progression.

BACKGROUND INFORMATION AND PRIOR ART

Myopia of an eye is characterized by the fact that the eye focuses light in front of the retina. Myopia has both genetic and environmental origins. In the latter case, it develops due for instance to the increase in near vision tasks and in usage of digital devices such as digital screens of computers and smartphones, and also to less outdoor activities.

Many solutions exist that aim at reducing myopia evolution. For example, it is known to use a lens arranged to be worn in front of an eye of an individual and having micro-optical elements comprising optical features to provide evolution control function of myopia in order to manage the myopia progression. These solutions are functional but could alter the visual acuity of the subject.

SUMMARY OF THE INVENTION

In this context, one object of the invention is to provide a spectacle lens with a good tradeoff between visual acuity and myopia discomfort and evolution control.

The above objects are achieved according to the invention by providing a spectacle lens comprising an arrangement of micro-optical elements,

at least one of the micro-optical elements having a micro-optical axis and a micro-optical face,

- a maximum of a first altitude first order gradient associated to a first section of the micro-optical face being greater than 1.5 $\mu$m/mm and a minimum of the first altitude first order gradient being smaller than -1.5 $\mu$m/mm, and
- a maximum a second altitude first order gradient associated to a second section of the micro-optical face being greater than 1.5 $\mu$m/mm and a minimum of the second altitude first order gradient being smaller than -1.5 $\mu$m/mm,

the first section following a first axial plane passing through the micro-optical axis, the second section following a second axial plane passing through the micro-optical axis,
the first axial plane being perpendicular to the second axial plane.

In other words, one object of the invention is a spectacle lens for correcting refractive error of an eye of an individual, said spectacle lens providing a macro-optical function with at least a spherical power and comprising an arrangement of micro-optical elements,
each micro-optical element having an micro-optical axis and a micro-optical face, said micro-optical face having a shape presenting the following characteristics :

- a first altitude first order gradient defined as a gradient of a first distance from each point of a section of the micro-optical face of the micro-optical element in a first axial plane passing through the micro-optical axis of the micro-optical element to a micro-optical reference radial plane perpendicular to the micro-optical axis, as a function of the first distance of that point to a reference axis contained within the first axial plane and parallel to the micro-optical axis of the micro-optical element, and
- a second altitude first order gradient defined as a gradient of a third distance from each point of a section of the micro-optical face of the micro-optical element in a second axial plane passing through the micro-optical axis of the given micro-optical element to the micro-optical reference radial plane perpendicular to the micro-optical axis, as a function of the third distance of that point to a reference axis contained within the second axial plane and parallel to the micro-optical axis of the micro-optical element, said first axial plane being perpendicular to the second axial plane, wherein the first and second altitude first order gradients have each a maximum higher than 1.5 $\mu$m/mm in absolute value and a minimum higher than 1.5 $\mu$m/mm in absolute value.

Thanks to the specific design of the micro-optical elements, the spectacle lens obtained present a good tradeoff between visual acuity and myopia discomfort and evolution control.

According to an embodiment,

- the first altitude first order gradient being a gradient of first distances associated respectively with points of the first section,

    each of the first distances being:

        ◦ from the point associated with the first distance,
        ◦ to a micro-optical reference radial plane perpendicular to the micro-optical axis,

    the first distances being function of respectively second distances, each of the second distances being

        ◦ from the point of the first section associated with the first distance,
        ◦ to a reference axis parallel to the micro-optical axis of the micro-optical element and contained within the first axial plane, and

- the second altitude first order gradient being a gradient of third distances, associated respectively with points of the second section,

    each of the third distances being:

        ◦ from the point of the second section associated with the third distance,
        ◦ to the micro-optical reference radial plane,

    the third distances being function of respectively fourth distances, each of the fourth distances being

        ◦ from the point associated with the third distance
        to a reference axis parallel to the micro-optical axis of the micro-optical element and contained within the second axial plane

According to an embodiment, the maximum of the first altitude first order gradient differs from the minimum of the first altitude first order gradient by less than 35 percent in absolute value.

According to an embodiment, the maximum of the second altitude first order gradient differs from the minimum of the second altitude first order gradient by less than 50 percent in absolute value.

According to an embodiment, the maximum of the first altitude first order gradient and the maximum of the second altitude first order gradient are comprised between 1.5 $\mu$m/mm and 10 $\mu$m/mm in absolute value, for example between 1.5 $\mu$m/mm and 4.5 $\mu$m/mm in absolute value.

According to an embodiment, the minimum of the first altitude first order gradient and the minimum of the second altitude first order gradient are comprised between 1.5 $\mu$m/mm and 10 $\mu$m/mm in absolute value for example between 1.5 $\mu$m/mm and 5 $\mu$m/mm in absolute value.

According to an embodiment, the maximum of the first altitude first order gradient differs by 6 to 40 percent from the maximum of the second altitude first order gradient in absolute value.

According to an embodiment, the minimum of the first altitude first order gradient differs by 6 to 110 percent from the minimum of the second altitude first order gradient in absolute value.

According to an embodiment, the spectacle lens comprises a layer of coating covering the arrangement of micro-optical elements, the coating being configured to shift the first altitude first order gradient by less than 1,5 $\mu$m/mm in absolute value and the second altitude first order gradient by less than 1,5 $\mu$m/mm in absolute value.

According to an embodiment, the maximum of the first altitude first order gradient is equal between the micro-optical elements with a tolerance of 10 percent and/or the minimum of the second altitude first order gradient is equal between the micro-optical elements with a tolerance of 10 percent.

According to an embodiment, the minimum of the first altitude first order gradient is equal between the micro-optical elements with a tolerance of 10 percent and/or the minimum of the second altitude first order gradient is equal between the micro-optical elements with a tolerance of 10 percent.

According to an embodiment, the at least one of the micro-optical elements has an average mean optical power between 1 and 10 diopters.

According to an embodiment, the at least one of the micro-optical elements has an aspherical optical power with a mean between 1 and 10 diopters.

According to an embodiment, the spectacle lens comprises a central zone, the central zone has a circular or hexagonal form.

According to an embodiment, the micro-optical elements are arranged according to concentric rings of micro-optical elements centered on the central zone.

According to an embodiment, the spectacle lens comprises a central zone, the central zone has a circular or hexagonal form. wherein the micro-optical elements are arranged according to concentric rings of micro-optical elements centered on a point located in the central zone.

According to an embodiment, the micro-optical elements are spaced from each other by at least 0.1 millimeter.

According to an embodiment, the at least one of the micro-optical elements provides a refractive optical function, a diffractive optical function or a diffusive optical function

According to an embodiment, each micro-optical element provides a refractive micro-optical function or a diffractive micro-optical function or a diffusive micro-optical function.

DETAILED DESCRIPTION OF EXAMPLE(S)

The following description with reference to the accompanying drawings will make it clear what the invention consists of and how it can be achieved. The invention is not limited to the embodiment/s illustrated in the drawings. Accordingly, it should be understood that where features mentioned in the claims are followed by reference signs, such signs are included solely for the purpose of enhancing the intelligibility of the claims and are in no way limiting on the scope of the claims.

In the accompanying drawings:

- Figure 1 shows a schematic perspective view of spectacles comprising a pair of lenses according to the present disclosure;
- Figure 2 shows a schematic axial cut view of a spectacle lens according to the present disclosure;
- Figure 3A shows a first schematic expended axial cut view of a part of the spectacle lens shown on figure 1, showing more in detail a micro-optical element;
- Figure 3B shows a second schematic expended axial cut view of a part of the spectacle lens shown on figure 1, showing more in detail a micro-optical element;
- Figure 4 shows a front view of a first example of a spectacle lens according to the present disclosure, when projected into a facial plane perpendicular to the main axis of the spectacle lens;
- Figure 5 shows an expanded view of a part of the spectacle lens shown on figure 4;
- Figure 6 shows a graphical representation of a computed net first altitude of a section of a part of the front face of the spectacle lens comprising two adjacent micro-optical elements in a first axial plane passing through the micro-optical axis of the micro-optical elements;
- Figure 7 shows a graphical representation of a computed net second altitude of a section of a part of the front face of the spectacle lens comprising two adjacent micro-optical elements in a second axial plane passing through the micro-optical axis of the micro-optical elements and perpendicular to the first axial plane;
- Figure 8 shows a graphical representation of a computed first altitude first order gradient of a section of the part of the front face of the spectacle lens comprising two adjacent micro-optical elements in the first axial plane, the two micro-optical elements being covered by a coating;
- Figure 9 shows a graphical representation of a computed second altitude first order gradient of a section of the part of the front face of the spectacle lens comprising two adjacent micro-optical elements in the second axial plane shown, the two micro-optical elements being covered by a coating;
- Figure 10 shows a graphical representation of a computed conventional norm of altitude first order gradient of the micro-optical face of a micro-optical element determined in the first and second axial planes, said micro-optical element being covered by a coating;
- Figure 11 shows a graphical representation of a computed first altitude second order gradient of a section of the part of the front face of the spectacle lens comprising two adjacent micro-optical elements in the first axial plane, the two micro-optical elements being covered by a coating;
- Figure 12 shows a graphical representation of a computed second altitude second order gradient of a section of the part of the front face of the spectacle lens comprising two adjacent micro-optical elements in the second axial plane , the two micro-optical elements being covered by a coating;
- Figure 13 shows a graphical representation of a computed first altitude first order gradient of a section of the part of the front face of the spectacle lens comprising two adjacent micro-optical elements in the first axial plane, the two micro-optical elements being free of any coating;
- Figure 14 shows a graphical representation of a computed second altitude first order gradient of a section of the part of the front face of the spectacle lens comprising two adjacent micro-optical elements in the second axial plane, the two micro-optical elements being free of any coating;

- Figure 15 shows a graphical representation of a computed conventional norm of altitude first order gradient of the micro-optical face of a micro-optical element determined in the first and second axial planes, said micro-optical element being free of any coating;
- Figure 16 shows a graphical representation of a computed first altitude second order gradient of a section of the part of the front face of the spectacle lens comprising of two adjacent micro-optical elements in the first axial plane, the two micro-optical elements being free of any coating;
- Figure 17 shows a graphical representation of a computed second altitude second order gradient of a section of the part of the front face of the spectacle lens comprising of two adjacent micro-optical elements in the second axial, the two micro-optical elements being free of any coating;
- Figure 18 shows an expanded view of a second example of a spectacle lens according to the present disclosure;
- Figure 19 shows a graphical representation of a computed first altitude first order gradient of a section of a part of the front face of the spectacle lens comprising of two adjacent micro-optical elements in a first axial according to the second example shown on figure 18, the two micro-optical elements being covered by a coating;
- Figure 20 shows a graphical representation of a computed second altitude first order gradient of a section of a part of the front face of the spectacle lens comprising two adjacent micro-optical elements in a second axial plane according to the second example shown on figure 18, the two micro-optical elements being covered by a coating;
- Figure 21 shows a graphical representation of a computed conventional norm of altitude first order gradient of the micro-optical face of a micro-optical element determined in the first and second axial planes according to the second example shown on figure 18, said micro-optical element being covered by a coating;
- Figure 22 shows a graphical representation of a computed first altitude second order gradient of a section of the part of the front face of the spectacle lens comprising two adjacent micro-optical elements determined in the first axial plane shown on figure 18, the two micro-optical elements being covered by a coating;
- Figure 23 shows a graphical representation of a computed second altitude second order gradient of a section of the part of the front face of the spectacle lens comprising two adjacent micro-optical elements in the second axial plane according to the second example shown on figure 18, the two micro-optical elements being covered by a coating;
- Figure 24 shows a graphical representation of a computed first altitude first order gradient of a section of the part of the front face of the spectacle lens comprising two adjacent micro-optical elements in the first axial plane according to the second example shown on figure 18, the two micro-optical elements being free of any coating;
- Figure 25 shows a graphical representation of a computed second altitude first order gradient of a section of the part of the front face of the spectacle lens comprising of two adjacent micro-optical elements in the second axial plane according to the second example shown on figure 18, the two micro-optical elements being free of any coating;
- Figure 26 shows a graphical representation of a computed conventional norm of altitude first order gradient of the micro-optical face of a micro-optical element determined in the first and second axial planes according to the second example shown on figure 18, said micro-optical element being free of any coating;
- Figure 27 shows a graphical representation of a computed first altitude second order gradient of a section of the part of the front face of the spectacle lens comprising of two adjacent micro-optical elements in the first axial plane according to the second example shown on figure 18, the two micro-optical elements being free of any coating;
- Figure 28 shows a graphical representation of a computed second altitude second order gradient of a section of the part of the front face of the spectacle lens comprising two adjacent micro-optical elements in the second axial plane according to the second example shown on figure 18, the two micro-optical elements being free of any coating.

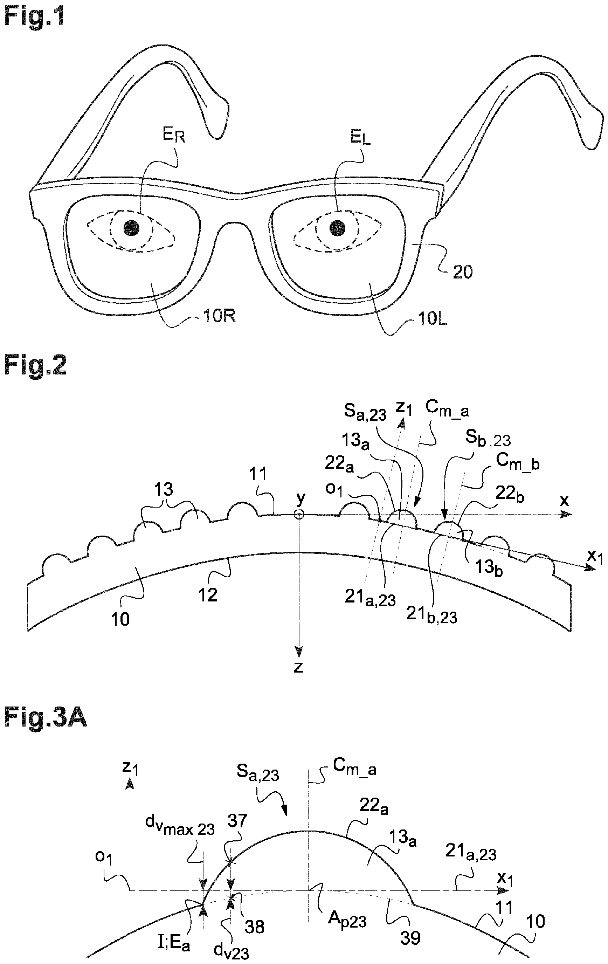

Figures 1 to 5 show a spectacle lens 10 according to the present disclosure.

The spectacle lens 10 is here a concave lens, with convex front face 11 and concave rear face 12, but could alternatively be a concavo-convex lens or a plano-convex lens.

As shown on figure 1, two similar spectacle lenses 10, namely a right spectacle lens 10R and a left spectacle lens 10L are intended to be mounted on a frame 20 of spectacles in order to be positioned in front of the right eye $E_R$ and the left eye $E_L$ of the wearer.

The spectacle lens 10 illustrated by figure 2 has two opposite optical faces, the front face 11 directed towards an object side and the rear face 12 that is closest to the eye $E_R$, $E_L$ of the wearer. The spectacle lens 10 presents a center V10, which is typically the optical or geometrical center of the spectacle lens 10.

The spectacle lens 10 has an optical design comprising a macro-optical component and a micro-optical component.

The macro-optical component of the optical design (also referred to as "macro-optical design") provides a macro-optical function providing at least one global refractive power over most or all the useful radial width of the spectacle lens 10, to provide the wearer's eye a dioptric correction adapted to the dioptric correction need of the wearer in wearing conditions. For example, this macro-optical function is provided by the geometry of the front face 11 or of the rear face 12 or of both faces, typically by adapting the curvature radii of one or both faces of the spectacle lens. The refractive power of the spectacle lens 10 is generally comprised between ±15 diopters.

The refractive power provided by the macro-optical design comprises at least a spherical power and may also comprise a cylindrical power, a prismatic deviation power, according to the wearer's correction need determined by an eye care professional in order to correct the vision defects of the wearer. Typically, the global refractive power corresponds to the dioptric correction based on a prescription of the wearer, for example in standard wearing conditions. For example, the prescription for an ametropic wearer comprises the values of optical power and of astigmatism comprising a cylinder and an axis for distance vision and/or for near vision.

The spectacle lens defined according to the present disclosure is adapted to correct the vision of an individual (i.e. a wearer) in wearing conditions. The wearing conditions are to be understood as the position of the spectacle lens 10 in a spectacle frame 20 worn by the wearer in front of its eyes. The wearing conditions are defined according to physiological parameters of the wearer or to geometrical parameters of the frame 20 when the frame 20 is worn by the wearer. The wearing conditions comprise a pantoscopic angle, a cornea to lens distance, a pupil to cornea distance, an eye rotation center (ERC) to pupil distance and a wrap angle. Figure 1 shows a pair of spectacle lenses, numbered 10R and 10L. The spectacle lens 10R is worn in front of the right eye $E_R$ of the wearer and the spectacle lens 10L is worn in front of the left eye $E_L$ of the wearer.

An example of standard wearing conditions may be defined by a pantoscopic angle of -8° for an adult or between 0° and 5° for a child, a cornea to lens distance of 12 mm, a pupil to cornea distance of 2 mm, an ERC to pupil distance of 11.5 mm and a wrap angle of 0°.

The pantoscopic angle is the angle in a vertical plane between the normal to the rear surface 12 of the spectacle lens 10 and the visual axis of the eye (axis A) in a primary position, defined as a horizontal direction, when the wearer gazes straight ahead at infinity.

The cornea to lens distance is the distance along the visual axis of the eye E in a primary position between the cornea and the rear surface 12 of the spectacle lens 10.

The wrap angle of the spectacle frame 20 is the angle in the horizontal plane between the normal to the rear face 12 of the lens at its center and the sagittal plane.

The micro-optical component of the optical design (also referred to as "micro-optical design") of the spectacle lens 10 is made of several micro-optical elements 13 arranged on at least one of the front and rear faces of the lens, preferably the convex front face.

Each micro-optical element has its own optical function and has small dimensions of less than 2 mm, preferably less than 1 mm. Each micro-optical element consists for example in a microlens, a Pi-Fresnel lens, a prism, a diffuser, a beam-splitter or a diffraction grating. The micro-optical elements are typically formed by photolithography, holography, molding, machining or encapsulation. The micro-optical elements can be spherical (or at least almost spherical with exception of the parts comprising spherical aberration) or aspherical.

This arrangement of all the micro-optical elements provides a micro-optical function which is distinct from and complements the macro-optical function. Thus, the global optical function of the spectacle lens 10 is the addition of its macro-optical function and of its micro-optical function respectively provided by the macro-optical and micro-optical components of its optical design. The micro-optical function of the spectacle lens 10 is the optical function provided by the spectacle lens 10 without its macro-optical design, that is without any global refractive power over most or all the useful radial width of the spectacle lens 10. The macro-optical function of the spectacle lens 10 is the optical function provided by the spectacle lens 10 without its micro-optical design, that is without any micro-optical element.

Each micro-optical element provides a refractive, diffractive or diffusive function.

In an embodiment, a part or all of the micro-optical elements are refractive micro-optical elements. Each refractive micro-optical element can comprise a monofocal or a bifocal spherical dioptric power.

In another embodiment, a part or all of the micro-optical elements are diffractive. Each diffractive micro-optical element comprises for example a diffractive Pi-Fresnel micro-lens. A diffractive Pi-Fresnel micro-lens has a phase function, which presents $\pi$ phase jumps at the nominal wavelength $\lambda 0$. The wavelength $\lambda 0$ is preferably 550 nm for human eye vision applications. The diffractive Pi-Fresnel micro-lens presents an optical axis passing through the optical center of the micro-lens. The micro-lens with diffractive Pi-Fresnel micro-optical elements mainly diffracts in two diffraction orders associated with two dioptric powers $P0(\lambda 0)$ and $P1(\lambda 0)$. Thus, when receiving collimated light, the micro-lens concentrate light on two distinct areas on their axis.

For example, the dioptric power $P0(\lambda 0)$ is comprised in a range of +/-0.12 diopter in addition to a spherical power of the predetermined refractive power of the spectacle lens, deriving for example from a prescription for the wearer.

According to an embodiment, the dioptric power $P1(\lambda 0)$ is comprised in absolute value between 1 diopter and 10 diopters. Preferably, the dioptric power $P1(\lambda 0)$ is comprised between $\pm 2$ diopters and $\pm 6$ diopters.

As an alternative, all or a part of the micro-optical element are diffractive micro-optical elements. Each diffractive micro-optical element comprises a diffusive micro-optical element scattering light. For example, a collimated light is scattered in a cone with an apex angle ranging from +/-1 ° to +/- 40°. In an example, the diffusive micro-optical elements are adapted to scatter light locally, i.e. at the intersection between the given micro-optical element and the wavefront arriving on the given micro-optical element. The micro-optical elements having a diffusive optical function may be similar to the micro-optical elements described in the document US10302962.

Each micro-optical element 13has a micro-optical axis Cm. Typically, the micro-optical axis Cm of a given micro-optical element corresponds to the axis of revolution or to the optical axis of the micro-optical element.

In the example illustrated, all the micro-optical elements 13 are located on the front face 11 of the spectacle lens 10.

Alternatively, all or a part of the micro-optical elements can be located on the rear face 12 or on both front face 11 and rear face 12 of the spectacle lens 10.

Alternatively, all or a part of the micro-optical elements can be embedded in the thickness of the spectacle lens between its front and rear faces.

In practice, the micro-optical elements are formed as a single integral part with the rest of the spectacle lens (typically by injection molding, press-molding, rolling or machining) or, as an alternative, on a film (forming of a patch or laminated) applied over one or both of the front face 11 and the rear face 12 of the spectacle lens 10.

The spectacle lens 10 is arranged for controlling the myopia growth.

In a non-limitative example, the arrangement of the micro-optical elements 13 of the spectacle lens 10 has optical features to provide an evolution control function of the myopia for the eye of the wearer. In other words, the micro-optical elements 13 of the spectacle lens 10 have each optical features adapted to control the myopia growth.

According to an embodiment, the arrangement of the micro-optical elements of the spectacle lens is adapted to provide a specific spatial distribution of blur also called defocus effect. To this end, the micro-optical elements comprise micro-lenses providing a refractive power that differs from the refractive power of the macro-optical component the optical design of the spectacle lens 10.

As to the macro-optical design of the spectacle lens, a virtual macro-optical front face 39 is defined as being the front face that would have the spectacle lens to provide exclusively its macro-optical function, excluding its micro-optical function, or in other words as corresponding exclusively to the macro-optical component of the optical design of the spectacle lens, excluding the micro-optical component.

First example

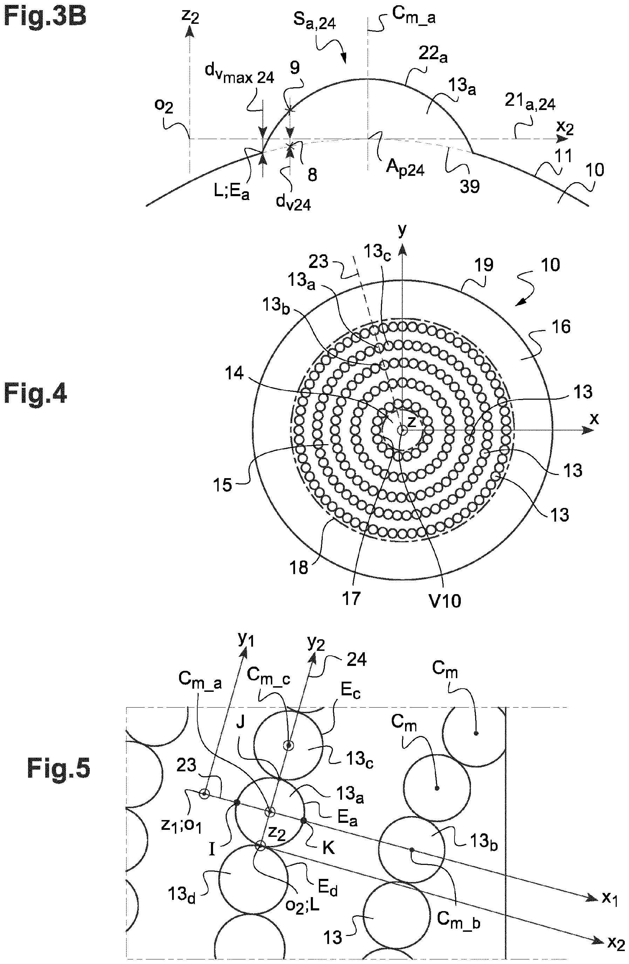

It will be disclosed in relation with figures 4 to 17 a first example of the spectacle lens 10 according to the present disclosure.

The spectacle lens 10 shown on figure 4 comprises a central zone 14 which is free of any micro-optical element, and which has a circular outline 17, for example of 4 millimeters in radius, centered on the ophthalmic center V10 of the spectacle lens 10. In a variant, the outline of the central zone 14 can present another shape, such as a polygonal (in particular hexagonal) or oval shape.

The spectacle lens 10 further comprises a first peripheral zone 15 arranged around the central zone 14 and a second peripheral zone 16 arranged around the first peripheral zone 15.

In the example of the figure 4, the arrangement of the micro-optical elements 13 of the spectacle lens 10 is disposed on the first peripheral zone 15. The second peripheral zone 16 is free of any micro-optical element.

By first or second "peripheral zone" it is meant a specific area of the spectacle lens.

The second peripheral zone 16 of the spectacle lens 10 is arranged to be fixed to the spectacle frame.

The central zone 14, the first peripheral zone 15 and the second peripheral zone 16 are concentric. They are centered on the optical center of the spectacle lens 10. The first peripheral zone 15 surrounds the central zone 14 and is bounded internally by the circular outline 17 of the central zone 14 and externally by a circular outline 18. The second peripheral zone 16 surrounds the first peripheral zone 15 and is bounded internally by the circular outline 18 of the first peripheral zone 15 and externally by a circular outline 19 which coincides with an outer edge of the spectacle lens 10.

In a non-limitative example, the circular outline 17 (which is the outer outline of the central zone 14 and the inner outline of the first peripheral zone 15) presents a radius between 2,00 millimeters and 5 millimeters, preferably between 3 and 4.5 millimeters.

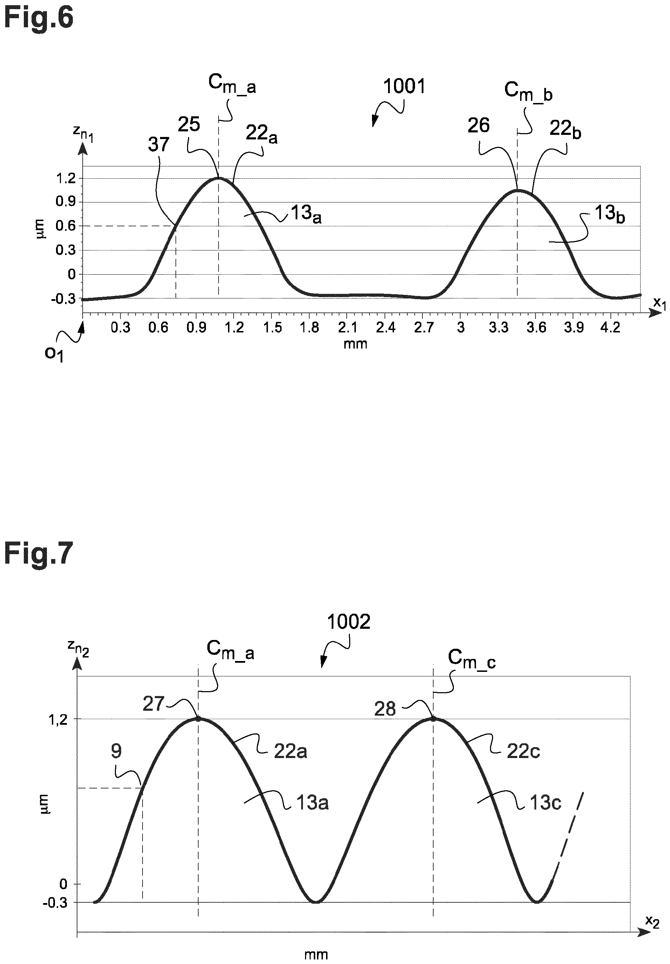

Preferably, the outline 18 (which is the outer outline of the first peripheral zone 15 and the inner outline of the second peripheral zone 16) presents a diameter between 40.00 millimeters and 80.00 millimeters, preferably between 50,00 millimeters and 70.00 millimeters. It is for example of 60.00 millimeters in diameter. The outer circular outline 19 (which is the outer edge of the spectacle lens) of the second peripheral zone 16 presents a diameter between 80,00 millimeters and 100.00 millimeters, preferably of 70,00 millimeters as illustrated by figure 7.

In the example shown on figure 4, the micro-optical elements 13 are arranged according to concentric rings of adjacent micro-optical elements 13 centered on a center of the central zone 14 that coincide with the center V10 of the spectacle lens 10. Each ring is spaced between 1.0 millimeter and 1.5 millimeter from each neighboring ring.

In an embodiment, the micro-optical elements of the spectacle lens 10 are all identical. Each micro-optical element 13 presents an aspherical mean power of 4.5 diopters (in addition to the mean macro-optical power of the spectacle lens), a diameter of 1.12 millimeters and a mean curvature radius of 131.3 millimeters. In the example shown on figure 7, the micro-optical elements have a diameter of 1.12 millimeter and present a mean curvature radius of 131.3 millimeters.

In another embodiments, the micro-optical elements belonging to a same ring present a same optical power. However, the optical mean power of the micro-optical elements belonging to different rings can change, for example it can vary between ± 0.1 diopter and ± 4 diopters between two adjacent rings. Typically, the micro-optical elements of the spectacle lens 10 present a mean power of + 4.5 diopters (considering all the micro-optical elements of the spectacle lens). In other words, in these embodiments, the micro-optical elements of the spectacle lens 10 can have different aspherical mean power. For example, the micro-optical elements located near the center of the spectacle lens have an aspherical mean power differing by about 2 diopters in absolute value from the one of the micro-optical elements located near the edge of the spectacle lens.

As shown on figures 4 and 5, each micro-optical element 13 has a micro-optical face. By micro-optical face of the micro-optical element, it is meant a face delimiting the micro-optical element, through which the luminous rays are refracted. In the following disclosure, the shape (i.e. the geometrical properties) of the micro-optical faces of the micro-optical elements are defined with reference to a reference radial plane (referenced $21a_{,23}$ and $21b_{,23}$ respectively for micro-optical elements 13a and 13b studied in the first axial plane 23 and represented in figures 2 and 3A) perpendicular to the micro-optical axis of the considered micro-optical element. Each micro-optical reference radial plane is tangential to the virtual macro-optical front face 39 and, thus, passes through a local apex $Ap_{23}$ (in the first axial plane 23 or $Ap_{24}$ when the micro-optical element is studied in the second axial plane 24) of the virtual macro-optical front face 39. Consequently, there are as many micro-optical reference radial planes as micro-optical elements 13. Each micro-optical reference radial plane is perpendicular to the micro-optical axis of the given micro-optical element.

The form of the spectacle lens 10 or of the zones are not limited to the examples shown on the drawings.

It will be disclosed, with reference to figures 2, 3A, 3B, 5, 6 and 7, technical features of the micro-optical face 22 of the micro-optical element 13.

The geometrical characteristics of the micro-optical faces 22 of the micro-optical elements 13 of the spectacle lens 10 are disclosed with cross sectional views in two axial planes, a first axial plane 23 and a second axial plane 24.

Figure 5 is an enlarged view showing four adjacent micro-optical elements 13a, 13b, 13c, and 13d. The first axial plane 23 is perpendicular to the second axial plane 24. The first axial plane 23 passes through the micro-optical axis Cm_a of the micro-optical element 13a, the micro-optical axis Cm_b of the micro-optical element 13b and the ophthalmic center of the spectacle lens 10 (as the rings of the spectacle lens 10 are concentric). The micro-optical element 13b pertains to the ring of micro-optical elements that internally surrounds the ring to which the micro-element 13a pertains. The micro-optical element 13b is spaced between 1.00 and 1.50 millimeters from the micro-optical element 13a (edge to edge).

The second axial plane 24 shown on figure 5 passes through the optical axis Cm_a of the micro-optical element 13a and the micro-optical axis Cm_c of the micro-optical element 13c. The micro-optical element 13c pertains to the same ring of micro-optical elements as the micro-optical element 13a and is contiguous with the micro-optical element 13a. In other words, it means that the micro-optical element 13a is in contact with the micro-optical element 13c, their respective edges being tangential.

It is defined a first orthogonal frame of reference $(O_1, x_1, y_1, z_1)$ where:

- axis $x_1$ is comprised in the micro-optical reference radial plane $21a_{,23}$ and in the first axial plane 23 (a value given along the axis $x_1$ pertains to a second distance),
- axis $y_1$ is comprised in the reference radial plane $21a_{,23}$ and is perpendicular to axis $x_1$,
- axis $z_1$ is, as consequence, parallel to the micro-optical axis Cm_a and perpendicular to the reference radial plane $21a_{,23}$ (a value given along the axis $z_1$ pertains to a first distance),
- origin $O_1$ is placed in the middle of the ring of optical elements containing the micro-optical element 13a under consideration and the ring of optical elements surrounding externally the ring of optical elements to which pertains the micro-optical element 13a.

It is defined a second orthogonal frame of reference $(O_2, x_2, y_2, z_2)$ where:

- axis $x_2$ is comprised in a micro-optical reference radial plane $21a_{,24}$ and in the second axial plane 24 (a value given along the axis $x_2$ pertains to a fourth distance),
- axis $y_2$ is comprised in the reference radial plane $21a_{,24}$ and is perpendicular to axis $x_2$,
- axis $z_2$ is, as consequence, parallel to the micro-optical axis Cm_a and perpendicular to the reference radial plane $21a_{,24}$ (a value given along the axis $z_2$ pertains to a third distance),
- origin $O_2$ is placed at junction of the edge of the micro-optical element 13a and of the edge of a micro-optical element 13d pertaining to the same ring of micro-optical elements to which pertains the micro-optical element 13a, the micro-optical element 13a being between the micro-optical elements 13c and 13d.

Figure 6 shows a graphical representation 1001 of a net first altitude of a section of a part of the front face of the spectacle lens comprising the two adjacent micro-optical elements 13a, 13b in the first axial plane 23.

The graphical representation 1001 gives

- in ordinate, the net first altitude $zn_1$ of each point 37 of the section of the micro-optical faces 22a, 22b of the micro-optical elements 13a, 13b in the first axial plane 23 passing through the micro-optical axes Cm_a, Cm_b of the micro-optical elements 13a, 13b,
- as a function of the abscissa $x_1$ of the considered point 37.

It is understood that the abscissa along axis $x_1$ of the considered point 37 of the section $Sa,_{23}$, $Sb,_{23}$ of the micro-optical faces 22a, 22b is the distance (here the second distance) of this point to the reference axis $z_1$ (which is contained within the first axial plane 23 and parallel to the micro-optical axes Cm_a, Cm_b of the micro-optical elements 13a, 13b).

The net first altitude $zn_1$ of each considered point 37 of the section of each micro-optical face 22a, 22b in the first axial plane 23 is, defined as:

- a gross first altitude of that considered point, defined as the ordinate along axis $z_1$ of the considered point 37 of the section of the micro-optical face 22a, 22b.
- from which is subtracted a first virtual distance $dv_{23}$ defined (as shown on figure 3A) for each considered point 37, as the distance between the micro-optical reference radial plane $21a,_{23}$, $21b,_{23}$ and a virtual point 38 of the section of the virtual macro-optical front face 39 , the corresponding virtual point 38 having the same abscissa as the considered point 37 of the section of the micro-optical face.

It is understood that the ordinate along axis $z_1$ of the considered point 37 of the section $Sa,_{23}$ , $Sb,_{23}$ of the micro-optical faces 22a, 22b is the distance (here the first distance) from this point 37 to the reference axis $x_1$ and thus to the micro-optical reference radial plane $21a,_{23}$,

On figure 6, the parts of spectacle lens 10 that is free of micro-optical element present a net altitude $zn_1$ equal to -0.3 $\mu$m.

This net altitude value corresponds to a maximum value $dv_{max23}$ of the virtual distance :

- from the section of virtual macro-optical face 39 of the spectacle lens 10 in the first axial plane 23
- to the micro-optical reference radial plane $21a,_{23}$
- at the point I of the edge Ea of the micro-optical face 22a of the micro-optical element 13a.

In the present example, the graphical representation 1001 of the net first altitude presents negative value due to the curve of the spectacle lens as explained above.

The micro-optical elements 13a, 13b shown in the graphical representation illustrated by figure 6 present a rotational symmetry around their own micro-optical axis Cm (Cm_a, Cm_b). The micro-optical face 22a of the micro-optical element 13a presents a maximum value 25 higher than 0.9 micrometer. Typically, the maximum value 25 of the section $Sa,_{23}$ of the micro-optical face 22a of the micro-optical element 13a in the first axial plane 23 is of 1.2 micrometers. In a same way, the micro-optical face 22b of the micro-optical element 13b presents a maximum value 26 higher than 0.9 micrometer in the first axial plane 23. Typically, the maximum value 26 of the micro-optical face 22b of the micro-optical element 13b is of 1.05 micrometers in the first axial plane 23. It can be seen that the maximum 25 of the micro-optical face 22a is higher than the maximum 26 of the micro-optical face 22b of the micro-optical element 22b (about of 0.15 $\mu$m).

Figure 7 shows a graphical representation 1002 of a net second altitude of a section of a part of the front face of the spectacle lens comprising the two adjacent micro-optical elements 13a, 13c in the second axial plane 24.

The graphical representation 1002 gives

- in ordinate, the net second altitude $zn_2$ of each point 9 of the section $Sa,_{24}$ of the micro-optical faces 22a, 22c of the micro-optical elements 13a, 13c in the second axial plane 24 passing through the micro-optical axis Cm_a, Cm_c of the micro-optical elements 13a, 13c and perpendicular to the first axial plane 23,
- as a function of the abscissa $x_2$ of the considered point 9,

It is understood that the abscissa along axis $x_2$ of the considered point 9 of the section $Sa,_{24}$ of the micro-optical faces 22a, 22c is the distance (here the fourth distance) from this point to the reference axis $z_2$ (which is contained within the second axial plane 24 and parallel to the micro-optical axes Cm_a, Cm_c of the micro-optical elements 13a, 13c).

The net second altitude $zn_2$ of each considered point 9 of the section $Sa,_{24}$ of the micro-optical face 22a, 22c in the second axial plane 24 is, respectively, defined as:

- a gross second altitude of that considered point, defined as the ordinate along axis $z_2$ of the considered point of the section of the micro-optical face 22a, 22c,,
- from which is subtracted a first virtual distance $d_{v24}$ defined for each considered point 9, as the distance between the micro-optical reference radial plane $21a_{,24}$, $21c_{,24}$ and a virtual point of the section of the virtual macro-optical front face 39 , the corresponding virtual point having the same abscissa as the considered point 9 of the section of the micro-optical face.

It is understood that the ordinate along axis $z_2$ of the considered point of the section of the micro-optical faces 22a, 22c is the distance from this point to the reference axis $x_2$ and thus to the micro-optical reference radial plane $21a_{,24}$.

On figure 7, the parts of the spectacle lens 10 that is free of micro-optical element present a net altitude $zn_2$ equal to -0.3 $\mu$m.

This net altitude value corresponds to a maximum value $dv_{max24}$ of the virtual distance :

- from the section of virtual macro-optical face 39 of the spectacle lens 10 in the second axial plane 24
- to the micro-optical reference radial plane $21a_{,24}$
- at the point L of the edge Ea of the micro-optical face 22a of the micro-optical element 13a.

The reference radial plane $21a_{,23}$ and $21a_{,24}$ can refer to a same radial plane 21 depending on the curvature of the spectacle lens 10.

The section of the micro-optical face 22a of the micro-optical element 13a shown on figure 7 (graphical representation 1002) presents a maximum value 27 higher than 0.9 micrometer. Typically, the maximum value 27 of the section of the micro-optical face 22a of the micro-optical element 13a in the second axial plane 24 is of 1.2 micrometers. The section of the micro-optical face 22c of the micro-optical element 13c shown on the graphical representation 1002 is similar to the section of the micro-optical face 22a of the micro-optical element 13a in the second axial plane 24. It presents a maximum value 28 of 1.2 micrometers.

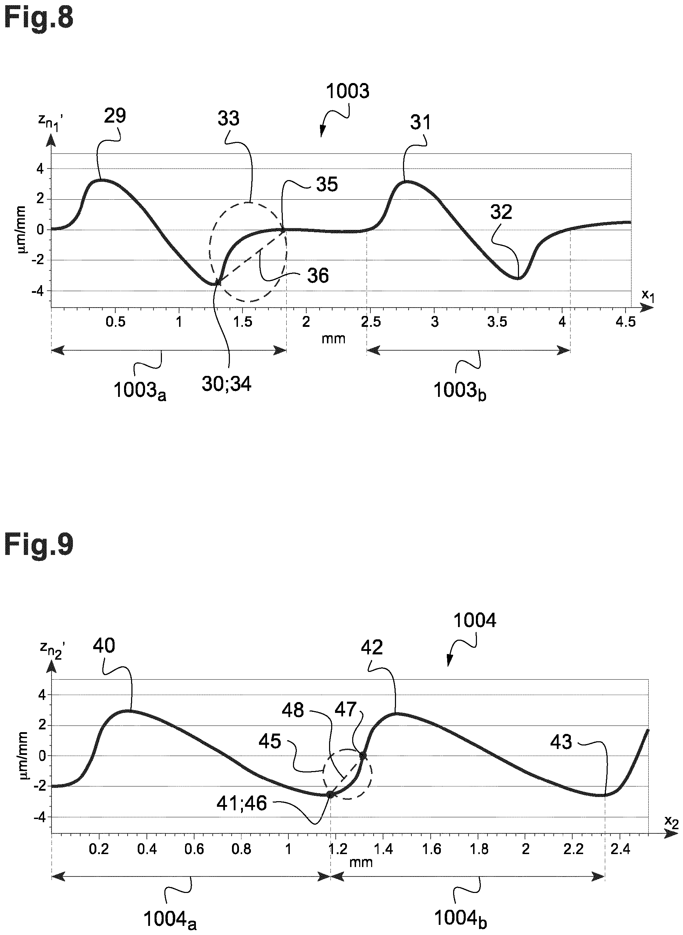

It will be described with reference to figures 8 to 17 technical features about the micro-optical faces 22a, 22b, 22c of the micro-optical elements 13a, 13b, 13c.

First order dimensions of the micro-optical faces of the micro-optical elements covered by a coating

In the examples disclosed with reference to figures 8 to 12, the measurements are carried out by considering a coating (for example a hard coating and/or an anti-reflective coating, and/or an Ultraviolet protective coating, etc.) positioned on the arrangement of micro-optical elements 13, said coating having a thickness comprised between 100 nm and 10 $\mu$m, for instance of 250 nm or 3$\mu$m.

The front face of the spectacle lens and in particular the micro-optical faces 22a, 22b, 22c of the micro-optical elements present an altitude first order gradient.

The altitude first order gradient in the first axial plane 23 is referred to as first altitude first order gradient. The altitude first order gradient in the second axial plane 24 is referred to as second altitude first order gradient.

The first altitude first order gradient and the second altitude first order gradient are computed as explained below.

First, it is determined three-dimensional information of the spectacle lens 10 comprising the shape of the rear face 11 and the front face 12, the thickness of the spectacle lens 10 defined between the rear and front faces, the base curve of the spectacle lens 10. In addition, the three-dimensional information of the spectacle lens comprises three-dimensional information about the shape of the micro-optical elements 13, for example the positions of each micro-optical element in the spectacle lens (even if the micro-optical elements 13 are encapsuled in a coating or embedded in the thickness of the spectacle lens between its front and rear faces), the curvature, the diameter, etc.

In addition, the macro-optical component of the optical design of the spectacle lens 10 is removed from the global shape of the spectacle lens 10. It means that the global refractive power and the geometry of the rear and front faces of the spectacle lens 10 are removed. For example, the macro-optical component may be modelized with a parametric model using spherical equation of the macro-optical component of the spectacle lens, complex polynomial equation of the macro-optical component of the spectacle lens, Zernike polynom of the macro-optical component of the spectacle lens or other method to simulate the macro-optical function of the spectacle lens 10. The parametric model is then subtracted from the global shape of the spectacle lens 10 to provide the reference radial plane on which the micro-optical element 13 are positioned.

Finally, the roughness of the micro-optical elements obtained in the three-dimensional information of the spectacle lens is removed to keep only the geometry of the micro-optical elements 13. For instance, a Fast Fourier Transform of the front face 11 of the spectacle lens comprising the micro-optical elements 13 is determined to perform a filtering operation.

Typically, the filtering operation is determined by computing a convolution of a three-dimensional signal f (x, y, z) by a door function h(x, y, z) in the spatial domain. The three-dimensional signal (which is in practice a numerical data file) represents a three-dimensional modeling of the front face of the spectacle lens comprising the micro-optical elements 13. The filtering operation is performed in the spectral domain. The altitude first order gradient is computed with the following equation: $\hat{g} = H\hat{f}$ with H corresponding to a sinus cardinal function (i.e. the Fourier transform of the door function h(x, y, z)), and $\hat{f}$ corresponding to the Fourier transform of the three-dimensional signal f (x, y, z).

To simplify the computer computation, the three-dimensional signal f(x, y, z) is only calculated in specific planes, namely the first axial plane 23 and the second axial plane 24. The three-dimensional signal is thus defined according to the frame of reference $(O_1, x_1, y_1, z_1)$ when it is computed in the first axial plane 23 and the three-dimensional signal is defined according to the frame of reference $(O_2, x_2, y_2, z_2)$ when the signal is computed in the second axial plane 24.

The aim of the filtering is to mitigate the roughness without changing the geometry of the micro-optical elements in order to calculate the first and second derivatives of the altitudes which will be disclosed below.

Then, the spatial frequencies are filtered using a threshold corresponding to the inverse of the diameter of the micro-optical elements 13 divided by a numerical constant. The numerical constant is comprised between 1 and 20 and depends on the accuracy of the measurements of the three-dimensional information determined previously. For instance, the numerical constant is equal to 10 when using conventional tactile surface measuring instrument or non-contact instrument.

Then an inverse Fourier transform is computed based on the results of the filtering operation to compute the first altitude first order gradient and the second altitude first order gradient.

The first altitude first order gradient is computed by a first order derivative of the net first altitude and the second altitude first order gradient is computed by a first order derivative of the net second altitude. The first order derivative of the net first altitude and the net second altitude is computed by process known to the skilled person.

For instance, the three-dimensional signal f (x, y, z) is defined on pixels matrix having a first dimension given along the x axis and a second dimension given along the y axis. The effective lateral resolution is defined. Typically, the effective lateral resolution is the lateral distance between two super-pixel center. It is for example set to 5 pixels. The effective lateral resolution allows determining the integration length (IL). The integration length depends on the size of the pixels and the effective lateral resolution. Here it is equal to 15 μm when the pixels have a size of 3 μm and when the integration length is of 5 pixels.

For each pixel, the first altitude first order gradient (FAFOG) of a given pixel ($p_1$) is determined according to the following formula:

$$\text{FAFOG} = \frac{z_{p_5} - z_{p_1}}{IL}$$

where $z_{p_1}$ corresponds to the value of net first altitude of the given pixel, $z_{p_5}$ corresponds to the value of the net first altitude of the fifth pixel positioned after the given pixel $p_1$ (or forwardly if the given pixel $p_1$ is close to an edge of the matrix) along the first dimension of the matrix (along x axis), IL the integration length.

Similarly, the second altitude first order gradient (SAFOG) of a given pixel ($p_1$) is determined based on the value of the net second altitude of the given pixel, the value of the net second altitude of the fifth pixel positioned after the given pixel $p_1$ (or forwardly if the given pixel $p_1$ is close to an edge of the matrix) along the second dimension of the matrix (along y axis), and the integration length (IL).

Figures 8 and 9 show graphical representations of the first altitude first order gradient and of the second altitude first order gradient obtained as disclosed above.

Figure 8 shows a graphical representation 1003 of the first altitude first order gradient of the section of the part of the front face of the spectacle lens comprising the adjacent micro-optical elements 13a, 13b in the first axial plane 23 referred to as first gradient curve 1003.

The first gradient curve 1003 comprises:

- a first part 1003a corresponding to the first altitude first order gradient of the section of the micro-optical face 22a of the micro-optical element 13a in the first axial plane 23, and
- a second part 1003b corresponding to the first altitude first order gradient of the section of the micro-optical face 22b of the micro-optical element 13b in the first axial plane 23.

The first altitude first order gradient of the micro-optical face 22a, 22b of the micro-optical element 13a, 13b is, respectively, the first order derivative (noted $z_{n1}'$) of the net first altitude (defined above) of each point of the section of the micro-optical face 22a, 22b in the first axial plane 23, as a function of the abscissa $x_1$ of the considered point 37. It is understood that the abscissa along axis $x_1$ of the considered point 37 of the section of the micro-optical faces 22a, 22b is the distance from this point to the reference axis $z_1$ (which is contained within the first axial plane 23 and parallel to the micro-optical axis Cm_a, Cm_b of the micro-optical element 13a, 13b).

The first part 1003a of the first gradient curve 1003 presents a maximum 29 higher than 1.5 $\mu$m/mm and a minimum 30 higher than 1.5 $\mu$m/mm in absolute value or lower than -1.5 $\mu$m/mm.

Specifically, in this example, the maximum 29 of the first part 1003a of the first gradient curve 1003 is higher than 2.0 $\mu$m/mm, here it is equal to 3.31 $\mu$m/mm. The minimum 30 of the first part 1003a of the first gradient curve 1003 is higher than 3.0 $\mu$m/mm in absolute value or lower than -3.0 $\mu$m/mm, specifically lower than - 3.48 $\mu$m/mm. Thus, the maximum 29 of the first part 1003a of the first gradient curve 1003 differs from the minimum 30 of the first part 1003a of the first gradient curve 1003 by less than 10 percent in absolute value.

The second part 1003b of the first gradient curve 1003 presents a maximum 31 and a minimum 32. The maximum 31 of the second part 1003b of the first gradient curve 1003 is higher than 1.5 $\mu$m/mm and the minimum 32 of the second part 1003b of the first gradient curve 1003 is higher than 1.5 $\mu$m/mm in absolute value or lower than -1.5 $\mu$m/mm. Specifically, the maximum 31 is of 3.09 $\mu$m/mm and the minimum 32 is of 3.11 in absolute value.

Typically, in the first axial plane 23, the maximum of the first altitude first order gradient of the micro-optical shape of a micro-optical element positioned in a ring of micro-optical elements differs by at least 0.01 $\mu$m/mm (and by less than 0.40 $\mu$m/mm) from the maximum of the first altitude first order gradient of the micro-optical shape of a micro-optical element positioned in an adjacent ring of micro-optical elements. Here, the maximum 29 of the first part 1003a of the first gradient curve 1003 differs by 0.22 $\mu$m/mm from the maximum 31 of the second part 1003b of the first gradient curve 1003.

Typically, in the first axial plane 23, the minimum of the first altitude first order gradient of the micro-optical shape of a micro-optical element positioned in a ring of micro-optical elements differs by at least 0.01 $\mu$m/mm (and by less than 0.40 $\mu$m/mm) in absolute value from the minimum of the first altitude first order gradient of the micro-optical shape of a micro-optical element positioned in an adjacent ring of micro-optical elements. Here, the minimum 30 of the first part 1003a of the first gradient curve 1003 differs by 0.37 $\mu$m/mm in absolute value (-0.37 $\mu$m/mm) from the minimum 32 of the second part 1003b of the first gradient curve 1003.

The first 1003a and second 1003b parts of the first gradient curve 1003 present a similar variation. Thus, for the sake of brevity, only the first part 1003a of first gradient curve 1003 will be disclosed in the following paragraph.

The first part 1003a of the first gradient curve 1003 comprises a sub-part 33 defined between a minimum point 34 of the first part 1003a of the first gradient curve 1003 and a zero point 35 of the first part 1003a of the first gradient curve 1003. In this example, the minimum 34 defining the first sub-part 33 of the first part 1003a of the first gradient curve 1003 is similar to the minimum 30 of the first part 1003a of the first gradient curve 1003. The point zero 35 defining the sub-part 33 corresponds to a zero value of the first part 1003a of the first gradient curve 1003. On figure 8, a segment 36 is defined between the minimum point 34 and the zero point 35 of the sub-part 33 of the first part 1003a of the first gradient curve 1003. The sub-part 33 of the first part 1003a of the first gradient curve 1003 is positioned above the segment 36.

Figure 9 shows a graphical representation 1004 of the second altitude first order gradient of the section of the part of the front face of the spectacle lens comprising the adjacent micro-optical elements 13a, 13c in the second axial plane 24, referred to as second gradient curve 1004.

The second gradient curve 1004 comprises:

- a first part 1004a corresponding to a variation of the second altitude first order gradient of the section of the micro-optical face 22a of the micro-optical element 13a in the second axial plane 24, and
- a second part 1004b corresponding to a variation of the second altitude first order gradient of the section of the micro-optical face 22c of the micro-optical element 13c in the second axial plane 24.

The second altitude first order gradient of the micro-optical face 22a, 22c of the micro-optical element 13a, 13c is, respectively, the first order derivate (noted $z_{n2}'$) of the net second altitude (defined above) of each point of the section of the micro-optical faces 22a, 22c in the second axial plane 24, as a function of the abscissa $x_2$ of the considered point. It is understood that the abscissa along axis $x_2$ of the considered point of the section of the micro-optical faces 22a, 22c is the distance from this point to the reference axis $z_2$ (which is contained within the second axial plane 24 and parallel to the micro-optical axis Cm of the micro-optical element 13a, 13c).

On figure 9, the first part 1004a of the second gradient curve 1004 presents a maximum 40 higher than 1.5 $\mu$m/mm and a minimum 41 higher than 1.5 $\mu$m/mm in absolute value or lower than -1.5 $\mu$m/mm.

Specifically, in this example, the maximum 40 of the first part 1004a of the second gradient curve 1004 is higher than 2.0 $\mu$m/mm. More precisely, here, it is equal to 3.0 $\mu$m/mm. In addition, the minimum 41 of the first part 1004a of the second gradient curve 1004 is higher than 2.5 $\mu$m/mm in absolute value or lower than -2.5 $\mu$m/ mm. Thus, the maximum 40 of the first part 1004a of the second gradient curve 1004 differs from the minimum 41 of the first part 1004a of the second gradient curve by less than 20 percent in absolute value.

In addition, the second part 1004b of second gradient curve 1004 presents a maximum 42 and a minimum 43. The maximum 42 higher than 1.5 $\mu$m/mm and the minimum 43 higher than 1.5 $\mu$m/mm in absolute value or lower than -1.5 $\mu$m/mm. Specifically, the maximum 42 is of 3.09 $\mu$m/mm and the minimum 43 is of 3.11 in absolute value.

Typically, in the second axial plane 24, the maximum of the second altitude first order gradient of the micro-optical shape of a micro-optical element positioned in a ring of micro-optical elements differs by at least 0.01 $\mu$m/mm (and by less than 0.40 $\mu$m/mm) from the maximum of the second altitude first order gradient of the micro-optical shape of a micro-optical element positioned in a same ring of micro-optical elements. Here, the maximum 40 of the first part 1004a of the second gradient curve 1004 differs by 0.18 $\mu$m/mm from the maximum 42 of the second part 1004b of the second gradient curve 1004.

Typically, in the second axial plane 24, the minimum of the second altitude first order gradient of the micro-optical shape of a micro-optical element positioned in a ring of micro-optical elements differs by less than 0.20 $\mu$m/mm in absolute value from the minimum of the second altitude first order gradient of the micro-optical shape of a micro-optical element positioned in a same ring of micro-optical elements. Here, the minimum 41 of the first part 1004a of the second gradient curve 1004 differs by 0.009 $\mu$m/mm in absolute value from the minimum 43 of the second part 1004b of the second gradient curve 1004.

The first part 1004a and the second part 1004b of the second gradient curve 1004 present a similar variation. Thus, for the sake of brevity, only the first part 1004a of the second gradient curve 1004 will be disclosed in the following paragraph.

The first part 1004a of the second gradient curve comprises a sub-part 45 defined between a minimum point 46 of the first part 1004a of the second gradient curve 1004 and a zero point 47 of the first part 1004a of the second gradient curve 1004. In this example, the minimum 46 defining the first sub-part 45 is similar to the minimum 41 of the first part 1004a of the second gradient curve 1004. The point zero 47 defining the sub-part 45 corresponds to a zero value of the first part 1004a of the second gradient curve 1004. On figure 9, a segment 48 is defined between the minimum point 46 and the zero point 47 of the sub-part 45 of the first part 1004a of the second gradient curve 1004. The sub-part 45 is positioned below the segment 48, in contrast to the sub-part 30 of the first part 1003a of the first gradient curve 1003 that is positioned above the segment 33 as explained on figure 7. Consequently, the micro-optical element 13a does not present a symmetrical gradient of altitudes when comparing the first gradient curve 1003 and the second gradient curve 1004 computed from two perpendicular planes.

Table I summarizes the differences between the maximum and the minimum of the first parts 1003a and 1004a of the first and second gradient curves computed from the micro-optical element 13a that is covered by a coating.

Table I

| | spectacle lens 10 covered by a coating | | |
| --- | --- | --- | --- |
| | Micro-optical element 13a | | Differencies in absolut term ($\mu$m/mm) |
| | measurement in the first axial plane 23 | measurement in the second axial plane 24 | |
| maximum of the altitude first order gradient ($\mu$m/ mm) | 3,31 | 3,03 | 0,28 |
| minimum of the altitude first order gradient ($\mu$m/ mm) | -3,48 | -2,48 | 1,00 |

It can be seen that the differences between the maximum 29 of the first part 1003a of the first gradient curve 1003 and the maximum 40 of the first part 1004a of the second gradient curve 1004 is lower than 10 %. Thus, regarding the maxima defined in the first and second axial planes, the micro-optical elements have a design nearly identical.

It can be seen that the differences between the minimum 30 of the first part 1003a of the first gradient curve 1003 and the minimum 41 the first part 1004a of the second gradient curve 1004 is lower than 45 %. Thus, regarding the minima defined in the first and second axial planes, the micro-optical elements have a design slightly different.

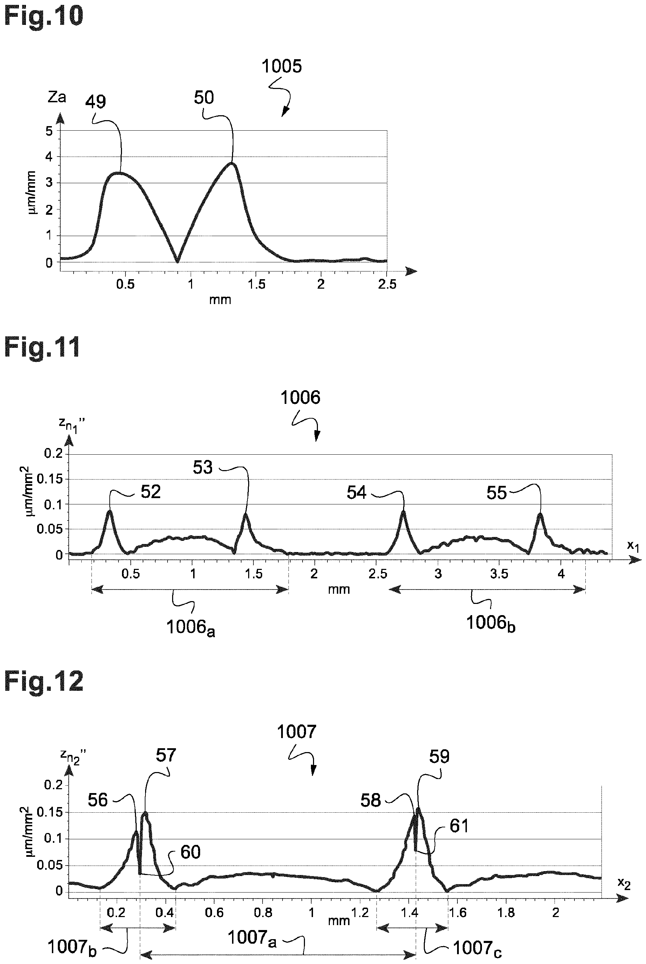

It will be then described with reference to figure 10 features of the section of the micro-optical face 22a of the micro-optical element 13a in the first 23 and second 24 axial planes.

Figure 10 shows a graphical representation 1005 of a conventional norm of altitude first order gradient of the micro-optical face 22a of the micro-optical element 13a in the first axial plane 23 and second axial plane 24. The graphical representation 1005 is referred to as curve 1005 of conventional norm of altitude first order gradient.

The conventional norm of altitude first order gradient is defined by the following equation:

$$Za = \sqrt{Z1'^2 + Z2'^2}$$

, where Z1' corresponds to the first altitude first order gradient and Z2' corresponds to the second altitude first order gradient.

On figure 10, the curve 1005 of the norm of altitude first order gradient computed from the micro-optical element 13a has two maxima, called respectively first maximum 49 and second maximum 50. The first maximum 49 and the second maximum 50 of the curve 1005 are higher than 2,00 $\mu$m/mm in absolute value, here higher than 3.0 $\mu$m/mm. Specifically, the first maximum 49 is of 3.40 $\mu$m/mm and the second maximum is of 3.71 $\mu$m/mm. It means that in this example, the first maximum 49 of the curve 1005 of the conventional norm of the altitude first order gradient differs by less of 10 % from the second maximum 50 of the curve 1005 of the conventional norm of the altitude first order gradient.

Second order dimensions of the micro-optical faces of the micro-optical elements covered by a coating

The first altitude first order gradient in the first axial plane 23 allows determining a first altitude second order gradient. The second altitude first order gradient in the second axial plane 24 allows determining a second altitude second order gradient.

The first altitude second order gradient is the derivative of the first altitude first order gradient of the micro-optical face in the first axial plane 23. The second altitude second order gradient is the derivative of the second altitude first order gradient of the micro-optical face in the second axial plane 24.

For each pixel, the first altitude second order gradient (FASOG) of a given pixel ($p_1$) is determined according to the following formula:

$$\text{FASOG} = \frac{s_{p_5} - s_{p_1}}{IL}$$

where $s_{p_1}$ corresponds to the value of the first altitude first order gradient of the given pixel, $s_{p_5}$ corresponds to the value of the first altitude first order gradient of the fifth pixel positioned after the given pixel $p_1$ along the first dimension of the matrix (along x axis), IL the integration length.

Similarly, the second altitude second order gradient (SASOG) of a given pixel ($p_1$) is determined based on the value of the second altitude first order gradient of the given pixel, the second altitude first order gradient of the fifth pixel positioned after the given pixel $p_1$ (or forwardly if the given pixel $p_1$ is close to an edge of the matrix) along the second dimension of the matrix (along y axis), and the integration length (IL).

The altitude second order gradient computed in the first axial plane 23 is referred to as first altitude second order gradient and the altitude second order gradient computed in the second axial plane 24 is referred to as second altitude second order gradient.

Figure 11 shows a graphical representation 1006 of the first altitude second order gradient of the section of the part of the front face of the spectacle lens comprising the adjacent micro-optical elements 13a, 13b in the first axial plane 23. The graphical representation 1006 is referred to as first gradient derivative curve 1006.

The first gradient derivative curve 1006 comprises:

- a first part 1006a corresponding to the first altitude second order gradient of the micro-optical face 22a of the micro-optical element 13a in the first axial plane 23, and
- a second part 1006b corresponding to the first altitude second order gradient of the micro-optical face 22b of the micro-optical element 13b in the first axial plane 23.

The first altitude second order gradient of the micro-optical face 22a, 22b of the micro-optical element 13a, 13b is, respectively, the second order derivative ($z_{n1}''$) of the net first altitude (defined above) of each point of the section of the micro-optical face 22a, 22b of the micro-optical element 13a, 13b in the first axial plane 23 as a function of the abscissa $x_1$ of the considered point 37. It is understood that the abscissa along axis $x_1$ of the considered point 37 of the section of the micro-optical faces 22a, 22b is the distance from this point reference axis $z_1$ (which is contained within the first axial plane 23 and parallel to the micro-optical axis Cm of the micro-optical element 13a, 13b).

The first part 1006a of the first gradient derivative curve 1006 presents a first pair of maxima, respectively numbered 52 and 53. Each maximum 52, 53 of the first part 1006a of the first gradient derivative curve 1006 presents a value comprised between 0.080 $\mu$m/mm$^2$ and 0.090 $\mu$m/mm$^2$. Specifically, the maximum 52 of the first pair of maxima is of 0.087 $\mu$m/mm$^2$ and the maximum 53 of the first pair of maxima is of 0.081 $\mu$m/mm$^2$.

In this example, the maximum 52 of the first pair of maxima is spaced by at least 1.0 millimeter from the maximum 53 of the first pair of maxima. Typically, the second maximum of the pair of maxima (here the maximum 53) defines a position (here a point K) on the edge Ea of the micro-optical face 22a of the micro-optical element 13a in the first axial plane 23. Here, the point K is opposed to the point I with respect to the micro-optical axis Cm_a of the micro-optical element 13a. The maximum 53 is at the foot of the micro-optical element 13a (see figure 5) in the first axial plane 23. Thus, the space between the two maxima 52, 53 of the pair of maxima give an information pertaining to an average size (or average dimension) between two opposite points (here the points I and K) defined on the edge of the micro-optical element 13a and positioned in the first axial plane 23.

The second part 1006b of the first gradient derivative curve 1006 presents a second pair of maxima, respectively numbered 54 and 55. Each maximum 54, 55 of the second pair of maxima presents a value comprised between 0.080 $\mu$m/mm$^2$ and 0.090 $\mu$m/mm$^2$. Specifically, the maximum 54 of the second pair of maxima is of 0.083 $\mu$m/mm$^2$ and the maximum 55 of the second pair of maxima is of 0.081 $\mu$m/mm$^2$.

In this example, the maximum 54 of the second pair of maxima is spaced by at least 1.0 millimeter from the maximum 55 of the second pair of maxima. As explained above, the space between the two maxima 54, 55 of the second pair of maxima give an information pertaining to an average size between two opposite point defined on the edge of the micro-optical element 13b and positioned in the first axial plane 23.

Thus, it can be seen that, in the first axial plane 23, the average size of a micro-optical element (here the micro-optical element 13a) belonging to a ring of micro-optical elements is nearly identical to the average size of a micro-optical element (here the micro-optical element 13b) positioned in an adjacent ring of micro-optical elements.

The mean deviation between the values of two maxima belonging to a same pair of maxima is of 0.004 $\mu$m/mm$^2$.

Figure 12 shows a graphical representation 1007 of the second altitude second order gradient of the section of the part of the front face of the spectacle lens comprising the adjacent micro-optical elements 13a, 13c in the second axial plane 24. This graphical representation is referred to as second gradient derivative curve 1007.

The second gradient derivative curve 1007 comprises a first part 1007a corresponding to the second altitude second order gradient of the micro-optical face 22a of the micro-optical element 13a in the second axial plane 24.

The second altitude second order gradient of the micro-optical face 22a of the micro-optical element 13a is the second order derivative ($z_{n2}''$) of the net second altitude (defined above) of each point of the section of the micro-optical face 22a, of the micro-optical element 13a in the second axial plane 24, as a function of the abscissa $x_2$ of the considered point. It is understood that the abscissa along axis $x_2$ of the considered point of the section of the micro-optical face 22a is the distance from this point to the reference axis $z_2$ (which is contained within the second axial plane 24 and parallel to the micro-optical axis Cm of the micro-optical element 13a). The first part 1007a of the second gradient derivative curve 1007 presents a first pair of maxima, respectively numbered 57 and 58. Each maximum 57, 58 of the first pair of maxima presents a value comprised between 0.080 $\mu$m/mm$^2$ and 0.160 $\mu$m/mm$^2$. Specifically, the maximum 57 of the first pair of maxima is of 0.149 $\mu$m/mm$^2$ and the maximum 58 of the first pair of maxima is of 0.137 $\mu$m/mm$^2$.

In this example, the maximum 57 of the first pair of maxima is spaced by less than 1.00 millimeter from the maximum 58 of the first pair of maxima. Typically, the second maximum of the pair of maxima (here the maximum 58) defines a position (here a point J) on the edge Ea of the micro-optical face 22a of the micro-optical element 13a in the second axial plane 24. Here, the point J is opposed to a point L (positioned on the edge Ea) with respect to the micro-optical axis Cm_a of the micro-optical element 13a. The maximum 58 (pertaining to the position of the point J) is at the foot of the micro-optical element 13a (see figure 5) in the second axial plane 24 and thus it is close to the edge Ec of the micro-optical element 13c. Similarly, the point 57 (pertaining to the position of the point L) is at the foot of the micro-optical element 13a (see figure 5) in the second axial plane 24 and thus it is close to the edge Ed of the micro-optical element 13d. Thus, the space between the two maxima 57, 58 of the pair of maxima give an information pertaining to an average size (or average dimension) between the two opposite points (here the points L and J) defined on the edge of the micro-optical element 13a and positioned in the second axial plane 24.

In this example, the maximum 57 of the first pair of maxima is spaced by at least 1.00 millimeter from the maximum 58 of the first pair of maxima.

In addition, the second gradient curve 1007 comprises:

- a first sub-part 1007b corresponding to the second altitude second order gradient of a part of the micro-optical face 22a of the micro-optical element 13a in the second axial plane 24 and to the second altitude second order gradient of a part of the micro-optical face 22d of the micro-optical element 13d in the second axial plane 24,
- a second sub-part 1007c corresponding to the second altitude second order gradient of a part of the micro-optical face 22a of the micro-optical element 13a in the second axial plane 24 and to the second altitude second order gradient of a part of the micro-optical face 22c of the micro-optical element 13c in the second axial plane 24.

The first sub-part 1007b of the second gradient derivative curve 1007 presents a second pair of maxima comprising the maximum 57 and a maximum numbered 56. Each maximum 56, 57 of the second pair of maxima presents a value comprised between 0.080 $\mu$m/mm$^2$ and 0.160 $\mu$m/mm$^2$. Specifically, the maximum 56 of the second pair of maxima is of 0.111 $\mu$m/mm$^2$ and the maximum 57 of the second pair of maxima is of 0.149 $\mu$m/mm$^2$. In addition, the

second gradient derivative curve 1007 comprises a valley having a minimum 60 between the two maxima 56, 57.

In this example, the maximum 56 of the second pair of maxima is spaced by less than 0.20 millimeter from the maximum 57 of the second pair of maxima.

As explained above, the two maxima show an inversion of the curvature between two contiguous micro-optical elements, here between the micro-optical element 13d and the micro-optical element 13a.

Similarly, the second sub-part 1007c of the second gradient derivative curve 1007 presents a third pair of maxima comprising the maximum 58 and a maximum numbered 59. Each maximum 58, 59 of the third pair of maxima presents a value comprised between 0.080 $\mu$m/mm$^2$ and 0.160 $\mu$m/mm$^2$. Specifically, the maximum 58 of the third pair of maxima is of 0.137 $\mu$m/mm$^2$ and the maximum 59 of the third pair of maxima is of 0.157 $\mu$m/mm$^2$. In addition, the second gradient curve 1007 comprises a valley having a minimum 61 between the two maxima 58, 59.

In this example, the maximum 58 of the third pair of maxima is spaced by less than 0.20 millimeter from the maximum 59 of the third pair of maxima.

As explained above, the two maxima show an inversion of the curvature between two contiguous micro-optical elements, here between the micro-optical element 13a and the micro-optical element 13c.

The values of the peaks (here the maxima) of the first gradient derivative curve and the second gradient derivative curve depend at least on the position of the ring of micro-optical elements in the spectacle lens 10 and on the power of the micro-optical elements.

The invention relates to a computer-implemented method for determining a spectacle lens as disclosed above. The spectacle lens is intended to be worn by a wearer.

First, the method comprises a step of defining a design of the spectacle lens. Typically, the step of defining comprises defining the macro-optical function of the spectacle lens, a number of micro-optical elements and then the optical features of the micro-optical element (geometric form, dioptric power, diameter) and additional information (density of the micro-optical element, position in the spectacle lens, etc.).

The method comprises a step of defining the net first altitude and the net second altitude of all the micro-optical elements of the spectacle lens as disclosed above. Typically, the net first altitude and the net second altitude are defined by computing a plurality of first axial planes and second axial planes for each micro-optical element as disclosed above to scan spatially the surface of the spectacle lens and by computing the micro-optical faces of each micro-optical elements. Preferably, each computed first axial plane comprises at least two micro-optical elements (here belonging to two different rings of micro-optical elements) and each computed second axial plane comprises at least two micro-optical elements (here two adjacent micro-optical elements belonging to a same ring of micro-optical elements). Of course, as explained above each first and second axial planes are defined perpendicular with respect to the micro-optical axis of a same micro-optical element.

Based on the net first altitude and the net second altitude of each micro-optical element, the method further comprises a step of determining the optical design of the micro-optical elements by computing the first altitude first order gradient and the second altitude first order gradient. Specifically, the first altitude first order gradient and the second altitude first order gradient are optimized to have each a maximum value higher than 1.5 $\mu$m/mm and a minimum value higher than 1.5$\mu$m/mm in absolute value. Typically, the optical design of the micro-optical elements (for instance the shape, the size, and the optical feature of each micro-optical element) is designed so that the first altitude first order gradient and the second altitude first order gradient of each micro-optical element present the values disclosed in each example, and thus based on the arrangement of micro-optical elements (for example an arrangement according to concentric rings or an arrangement of contiguous micro-optical elements), the use or not of a coating, etc.

Optionally, the method further comprises a step of determining the optical design of the micro-optical element based on the first altitude second order gradient and the second altitude second order gradient by computing the first altitude second order gradient and the second altitude second order gradient. Typically, the optical design of the micro-optical elements is designed so that the micro-optical faces of the micro-optical elements have first altitude second order gradient and the second altitude second order presenting the values disclosed in the different examples.

The computer-implemented method as disclosed above is typically used to manufacture the spectacle lens (i.e. a physical lens element). Typically, the method for manufacturing the spectacle lens comprises:

- a step of determining a design of the lens element using the computer-implemented method as disclosed above,
- a step of manufacturing the lens element based on the design.

First order dimensions of the micro-optical faces of the micro-optical elements free of any coating on the micro-optical elements

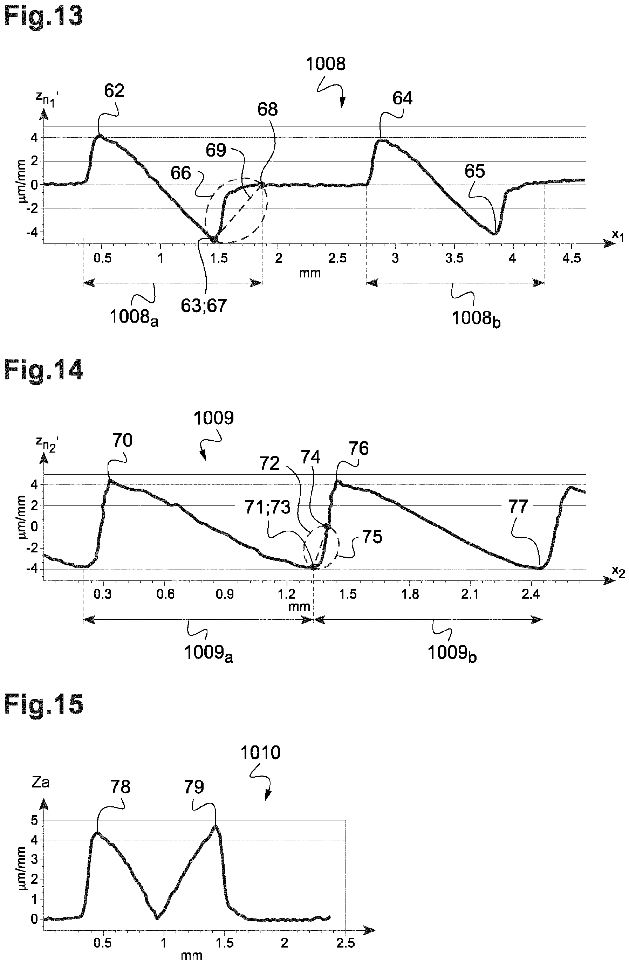

In the examples disclosed with reference to figures 13 to 17, the numeral values are given excluding any coating layer covering the micro-optical elements 13.

The altitude first order gradient obtained in that case is computed in the same way as explained above.

The micro-optical faces of micro-optical elements 13 are studied according to the graphical representations 1001 and 1002 illustrated by figures 6 and 7.

It will be first disclosed the first altitude first order gradient of the micro-optical faces 22a, 22b of the micro-optical elements 13a, 13b in the first axial plane 23 with reference to figure 13.

The first altitude first order gradient is represented by a first gradient curve 1008 having in abscissa the value $x_1$ and in ordinate the value $z_{n1}'$ as explained above.

The first gradient curve 1008 comprises:

- a first part 1008a corresponding to the first altitude first order gradient of the micro-optical face 22a of the micro-optical element 22a in the first axial plane 23, and
- a second part 1008b corresponding to the first altitude first order gradient of the micro-optical face 22b of the micro-optical element 13b in the first axial plane 23.

The first part 1008a of the first gradient curve 1008 presents a maximum 62 higher than 1.5 $\mu$m/mm and a minimum 23 higher than 1.5 $\mu$m/mm in absolute value (or lower than -1.5 $\mu$m/mm).

Specifically, in this example, the maximum 62 of the first part 1008a of the first gradient curve 1008 is higher than 3.0 $\mu$m/mm, here it is equal to 4.16 $\mu$m/mm. The minimum 63 of the first part 1008a of the first gradient curve 1008 is higher than 3.0 $\mu$m/mm in absolute value or lower than -3.0 $\mu$m/mm, specifically lower than - 4.49 $\mu$m/mm. Thus, the maximum 62 of the first part 1008a of the first gradient curve 1008a differs from the minimum 63 of the first part of the first gradient curve 1008 by less than 10 percent in absolute value.

The second part 1008b of the first gradient curve 1008 presents a maximum 64 and a minimum 65. The maximum 64 is higher than 3.0 $\mu$m/mm and the minimum 65 higher than 3.0 $\mu$m/mm in absolute value or lower than -3.0 $\mu$m/mm. Specifically, the maximum 64 is of 3.79 $\mu$m/mm and the minimum 65 is of 4.11 in absolute value.

Here, the maximum 62 of the first part 1008a of the first gradient curve 1008 differs by 0.37 $\mu$m/mm from the maximum 64 of the second part 1008b of the first gradient curve 1008. The minimum 63 of the first part 1008a of the first gradient curve 1008 differs by 0.38 $\mu$m/mm in absolute value (-0.38 $\mu$m/mm) from the minimum 65 of the second part 1008b of the first gradient curve 1008.

The first 1008a and second 1008b parts of the first gradient curve 1008 present a similar variation. Thus, for the sake of brevity, only the first part 1008a of the first gradient curve 1008 will be disclosed in the following paragraph.

The first part 1008a of the first gradient curve 1008 comprises a sub-part 66 defined between a minimum point 67 of the first part 1008a of the first gradient curve 1008 and a zero point 68 of the first part 1008a of the first gradient curve 1008. In this example, the minimum 67 defining the first sub-part 66 is similar to the minimum 63 of the first part 1008a of the first gradient curve 1008. The point zero 68 defining the sub-part 66 corresponds to a zero value of the first part 1008a of the first gradient curve 1008 (i.e. corresponding to a zero value of the first altitude first order gradient of the micro-optical face 22a of the micro-optical element 13a). On figure 13, a segment 69 is defined between the minimum point 67 and the zero point 68 of the sub-part 66. The sub-part 66 of the first part 1008a of the first gradient curve 1008 is positioned above the segment 69.

It will be disclosed a second altitude first order gradient of the section of the micro-optical faces 22a, 22c of the micro-optical elements 13a, 13c in the second axial plane 24 with reference to figure 14.

The second altitude first order gradient is represented by a second gradient curve 1009 having in abscissa the value $x_2$ and in ordinate the value $z_{n2}'$ as explained above.

The second gradient curve 1009 comprises:

- a first part 1009a corresponding to the second altitude first order gradient of the micro-optical face 22a of the micro-optical element 13a in the second axial plane 24, and,
- a second part 1009b corresponding to the second altitude first order gradient of the micro-optical face 22c of the micro-optical element 13c in the second axial plane 24.

The first part 1009a of the second gradient curve 1009 presents a maximum 70 higher than 1.5 $\mu$m/mm and a minimum 71 higher than 1.5 $\mu$m/mm in absolute value or lower than -1.5 $\mu$m/mm.

Specifically, in this example, the maximum 70 of the first part 1009a of the second gradient curve 1009 is higher than 3.0 $\mu$m/mm, here it is equal to 4.35 $\mu$m/mm. The minimum 71 of the first part 1008a of the second gradient curve 1009 is higher than 3.0 $\mu$m/mm in absolute value (or lower than -3.0 $\mu$m/mm), specifically lower than -3.67 $\mu$m/mm. Thus, the maximum 70 differs from the minimum 71 by less than 20 percent in absolute value.

Here, the maximum 70 of the first part 1009a of the second gradient curve 1009 differs by 0.07 $\mu$m/mm from the maximum 76 of the second part 1008b of the second gradient curve 1009. The minimum 71 of the first part 1009a of the second gradient curve 1009 differs by 0.15 $\mu$m/mm in absolute value from the minimum 77 of the second part 1009b of the second gradient curve 1009.

The first part 1009a of the second gradient curve 1009 comprises a sub-part 72 defined between a minimum point 73 of the first part 1009a of the second gradient curve 1009 and a zero point 74 of the first part 1009a of the second gradient curve 1009. In this example, the minimum 73 defining the first sub-part 72 is similar to the minimum 71 of the first part of second gradient curve 1009. The point zero 74 defining the sub-part 72 corresponds to a zero value of the first part 1009a of the second gradient curve 1008 (i.e. corresponding to a zero value of the altitude second order gradient of the micro-optical face 22a of the micro-optical element 13a in the second axial plane 24). On figure 14, a segment 75 is defined between the minimum point 73 and the zero point 74 of the sub-part 72. The sub-part 72 of the second gradient curve 1009 is positioned below the segment 75, in contrast to the sub-part 66 of the first part of first gradient curve 1008 that is positioned above the segment 69 as explained on figure 13. Consequently, the micro-optical element 13a does not present a symmetrical gradient of altitudes when comparing the first gradient curve 1008 with the second gradient curve 1009 computed from two perpendicular planes.

Table II summarizes the differences between the maximum and the minimum of the first part 1008a and 1009a of the first and second gradient curves of the micro-optical element 13a, distinguishing both cases with and without coating.

Table II

| | spectacle lens 10 covered by a coatina | | | spectacle lens 10 free of any coatina | | |
| --- | --- | --- | --- | --- | --- | --- |
| | Micro-optical element 13a | | Differencies in absolut term ($\mu$m/mm) | Micro-optical element 13a | | Differencies in absolut term ($\mu$m/mm) |
| | measurement in the first axial plane 23 | measurement in the second axial plane 24 | | measurement in the first axial plane 23 | measurement in the second axial plane 24 | |
| maximum of the first order gradient ($\mu$m/ mm) | 3,31 | 3,03 | 0,3 | 4,16 | 4,35 | 0,2 |
| minimum of the first order gradient ($\mu$m/ mm) | -3,48 | -2,48 | 1,0 | -4,49 | -3,67 | 0,8 |

It can also be seen that the coating shifts:

- the maximum of the first altitude first order gradient of 0.85 $\mu$m/mm;
- the maximum of the second altitude first order gradient of 1.32 $\mu$m/mm;
- the minimum of the first altitude first order gradient of 1.01 $\mu$m/mm (in absolute value);
- the minimum of the second altitude first order gradient of 1.19 $\mu$m/mm (in absolute value).

In addition, the second part 1009b of the second gradient curve 1009 presents a maximum 76 and a minimum 77. The maximum 76 is higher than 3.0 $\mu$m/mm and the minimum 77 is higher than 3.0 $\mu$m/mm in absolute value or lower than -3.0 $\mu$m/mm. Specifically, the maximum 76 is of 4.28 $\mu$m/mm and the minimum 77 is of 3.82 $\mu$m/mm in absolute value.

It will be then described with reference to figure 15 features of the section of the micro-optical face 22a of the micro-optical element 13a in the first axial plane 23 and in the second axial plane 24.

Figure 15 shows a graphical representation 1010 of a conventional norm of altitude first order gradient of the micro-optical face 22a of the micro-optical element 13a in the first and second axial planes. The graphical representation 1010 is referred to as curve 1010 of a conventional norm of altitude first order gradient.

On figure 15, the curve 1010 of the norm of altitude first order gradient of the micro-optical element 13a has two maxima, respectively referred to as first maximum 78 and second maximum 79. The first maximum 78 and the second maximum 79 of the curve 1010 are higher than 3,00 $\mu$m/mm in absolute value, here higher than 4.0 $\mu$m/mm. Specifically, the first maximum 78 is of 4.33 $\mu$m/mm and the second maximum 79 is of 4.62 $\mu$m/mm. It means that in this example, the first maximum 78 of the curve 1010 of the conventional norm of the altitude first order gradient differs by less of 10 % from the second maximum 79 of the curve 1010 of the conventional norm of the altitude first order gradient.

Second order dimensions of the micro-optical faces of the micro-optical elements free of any coating

As explained above, the first altitude first order gradient of the section micro-optical face in the first axial plane 23 allows determining a first altitude second order gradient and the second altitude first order gradient of the section micro-optical face in the second axial plane 24 allows determining a second altitude second order gradient.

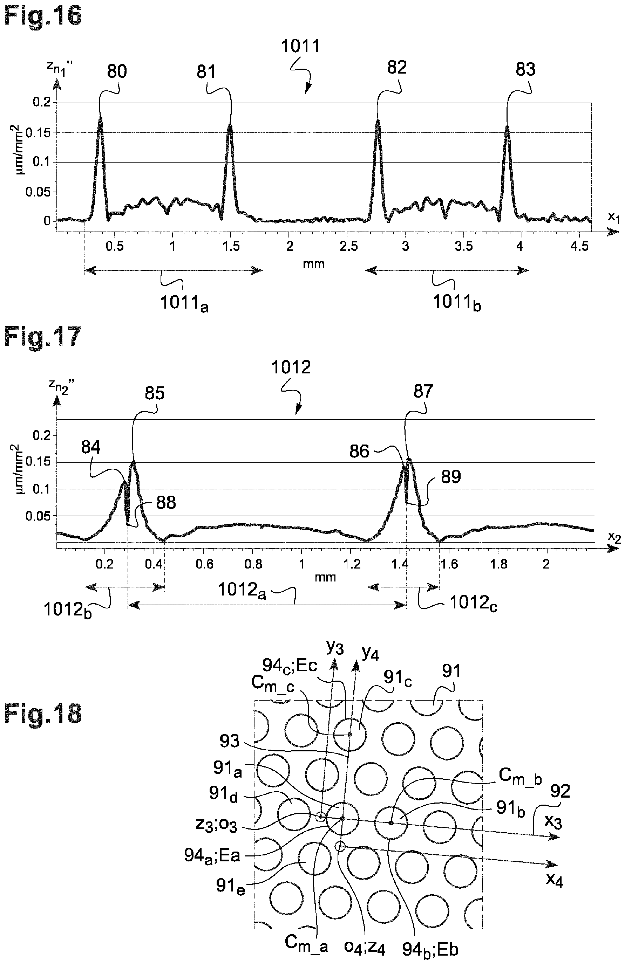

Figure 16 shows a graphical representation 1011 of the first altitude second order gradient of the section of the part of the front face of the spectacle lens comprising the micro-optical elements 13a, 13b in the first axial plane 23. The graphical representation 1011 is referred to as first gradient derivative curve 1011 having in abscissa the value $x_1$ and in ordinate the value $z_{n1}''$ as explained above.

The first gradient derivative curve 1011 comprises:

- a first part 1011a corresponding to the first altitude second order gradient of the micro-optical face 22a of the micro-optical element 13a in the first axial plane 23, and
- a second part 1011b corresponding to the first altitude second order gradient of the micro-optical face 22b of the micro-optical element 13b in the first axial plane 23.

The first part 1011a of the first gradient derivative curve 1011 presents a first pair of maxima, respectively numbered 80 and 81. Each maximum 80, 81 of the first pair of maxima presents a value comprised between 0.200 $\mu m/mm^2$ and 0.100 $\mu m/mm^2$. Specifically, the maximum 80 of the first pair of maxima is of 0.173 $\mu m/mm^2$ and the maximum 81 of the first pair of maxima is of 0.164 $\mu m/mm^2$.

In this example, the maximum 80 of the first pair of maxima is spaced by at least 1.0 millimeter from the maximum 81 of the first pair of maxima. As explained above, the space between the two maxima 80, 81 of the pair of maxima give an information pertaining to an average size (or average dimension) between two opposite points (here the points I and K) defined on the edge of the micro-optical element 13a and positioned in the first axial plane 23.

The deviation between the values of the two maxima 80, 81 is of 0.009 $\mu m/mm^2$.

The second part 1011b of the first gradient derivative curve 1011 presents a second pair of maxima, respectively numbered 82 and 83. Each maximum 82, 83 of presents a value comprised between 0.200 $\mu m/mm^2$ and 0.100 $\mu m/mm^2$. Specifically, the maximum 82 is 0.168 $\mu m/mm^2$ and the maximum 83 is 0.159 $\mu m/mm^2$.

In this example, the maximum 82 of the second pair of maxima is spaced by at least 1.0 millimeter from the maximum 83 of the second pair of maxima. As explained above, the space between the two maxima 82, 83 of the pair of maxima give an information pertaining to an average size (or average dimension) between two opposite points defined on the edge of the micro-optical element 13b and positioned in the first axial plane 23. It can be seen that the dimension defined with the maxima 80, 81 is nearly identical to the dimension defined with the maxima 82, 83 with a tolerance of 10%.

The deviation between the values of the two maxima 82, 83 is 0.009 $\mu m/mm^2$.

Figure 17 shows a graphical representation 1012 of the second altitude second order gradient of the section of the part of the front face of the spectacle lens comprising the micro-optical elements 13a, 13c in the second axial plane 24. The graphical representation 1012 is referred to as second gradient derivative curve 1012 having in abscissa the value $x_2$ and in ordinate the value $z_{n2}''$ as explained above.

The second gradient derivative curve 1012 comprises a first part 1012a corresponding to the second altitude second order gradient of the micro-optical face 22a of the micro-optical element 13a in the second axial plane 24.

The first part 1012a of the second gradient derivative curve 1012 presents a first pair of maxima, respectively numbered 85 and 86. Each maximum 85, 86 presents a value comprised between 0.100 $\mu m/mm^2$ and 0.180 $\mu m/mm^2$. Specifically, the maximum 85 is 0.150 $\mu m/mm^2$ and the maximum 86 is 0.147 $\mu m/mm^2$.

In this example, the maximum 85 is spaced by at least 1.00 millimeter from the maximum 86 of the first pair of maxima. As explained above, the space between the two maxima 85, 86 of the first pair of maxima give an information pertaining to an average size between two opposite point defined on the edge of the micro-optical element 13a and positioned in the second axial plane 24.

The deviation between the values of the two maxima 84, 85 is 0.003 $\mu m/mm^2$.

In addition, the second gradient curve 1012 comprises:

- a first sub-part 1012b corresponding to the second altitude second order gradient of a part of the micro-optical face 22a of the micro-optical element 13a in the second axial plane 24 and to the second altitude second order gradient of a part of the micro-optical face 22d of the micro-optical element 13d in the second axial plane 24,
- a second sub-part 1012c corresponding to the second altitude second order gradient of a part of the micro-optical face 22a of the micro-optical element 13a in the second axial plane 24 and to the second altitude second order gradient of a part of the micro-optical face 22c of the micro-optical element 13c in the second axial plane 24.

The first sub-part 1012b of the second gradient derivative curve 1012 presents a second pair of maxima comprising the maximum 85 and a maximum numbered 84. Each maximum 84, 85 of the second pair of maxima presents a value comprised between 0.080 $\mu$m/mm$^2$ and 0.160 $\mu$m/mm$^2$. Specifically, the maximum 84 of the second pair of maxima is of 0.144 $\mu$m/mm$^2$ and the maximum 85 of the second pair of maxima is of 0.150 $\mu$m/mm$^2$. In addition, the second gradient derivative curve 1012 comprises a valley having a minimum 88 between the two maxima 84, 85.

In this example, the maximum 84 of the second pair of maxima is spaced by less than 0.20 millimeter from the maximum 85 of the second pair of maxima.

As explained above, the two maxima show an inversion of the curvature between two contiguous micro-optical elements, here between the micro-optical element 13d and the micro-optical element 13a.

Similarly, the second sub-part 1012c of the second gradient derivative curve 1012 presents a third pair of maxima comprising the maximum 86 and a maximum numbered 87. Each maximum 86, 87 of the third pair of maxima presents a value comprised between 0.080 $\mu$m/mm$^2$ and 0.160 $\mu$m/mm$^2$. As explained above, the maximum 86 is of 0.147 $\mu$m/mm$^2$ and the maximum 87 is of 0.151 $\mu$m/mm$^2$. In addition, the second gradient curve 1007 comprises a valley having a minimum 89 between the two maxima 86, 87.

In this example, the maximum 86 of the third pair of maxima is spaced by less than 0.20 millimeter from the maximum 87 of the third pair of maxima.

As explained above, the two maxima show an inversion of the curvature between two contiguous micro-optical elements, here between the micro-optical element 13a and the micro-optical element 13c. It can be seen that the space defined with the maxima 84, 85 is nearly identical to the space defined with the maxima 86, 87 with a tolerance of 10%.

The second part 1012b of the second gradient derivative curve 1012 presents a second pair of maxima, respectively numbered 86 and 87. Each maximum 86, 87 presents a value comprised between 0.100 $\mu$m/mm$^2$ and 0.180 $\mu$m/mm$^2$. Specifically, the maximum 86 is 0.147 $\mu$m/mm$^2$ and the maximum 87 is 0.151 $\mu$m/mm$^2$.

In this example, the maximum 86 is spaced by less than 0.020 millimeter from the maximum 87.

The deviation between the values of the two maxima 86, 87 is 0.004 $\mu$m/mm$^2$.

## Second example

It will be disclosed in relation with figures 18 to 27 a second example of a spectacle lens 90 according to the present disclosure. Only the differences with the spectacle lens 10 disclosed above will be described.

The spectacle lens 90 comprises, like the spectacle lens 10, a central zone, a first peripheral zone arranged around the central zone and a second peripheral zone arranged around the first peripheral zone. Each zone of the spectacle lens 90 are concentric. The central zone and the second peripheral zone are without micro-optical element. The sizes of these zones are similar to the sizes of the zones disclosed above for the spectacle lens 10.

The spectacle lens 90 comprises an arrangement of micro-optical element 91 having a similar shape to the micro-optical elements 13 of the spectacle lens 10. These micro-optical elements 91 are positioned in the first peripheral zone of the spectacle lens 90. In contrast to the spectacle lens 10, the micro-optical elements 91 of the spectacle lens 90 are not contiguous. Each micro-optical element 91 have 1 millimeter in diameter and is spaced from the adjacent micro-optical elements 91 by at least 0,1 millimeter. For example, the edge of one optical element 91 is spaced from the edge of an adjacent optical element by at least 0.5 millimeter.

For instance, the density of the arrangement of the micro-optical elements over the first peripheral zone of the spectacle lens 90 is comprised between 40 to 60 percent. In this embodiment, the micro-optical elements 91 of the spectacle lens 90 are all identical. Each micro-optical element 91 presents a spherical power of 3.5 diopters, and a diameter of 1.0 millimeter.

Each micro-optical element 91 has a micro-optical axis Cm and a micro-optical face. The shape and dimensions of the micro-optical faces of the micro-optical elements 91 are calculated as for the spectacle lens 10. The micro-optical elements 91 illustrated by figure 18 present a rotational symmetry around their own micro-optical axis Cm.

As explained above, the micro-optical faces of the micro-optical elements 91 of the spectacle lens 90 are disclosed with reference to a first axial plane 92 and a second axial plane 93.

The first axial plane 92 passes through two micro-optical elements 91, numbered 91a and 91b. In this example, the first axial plane 92 passes through the micro-optical axis Cm of the micro-optical elements 91a, 91b. The micro-optical element 91a is spaced from the micro-optical element 91b by at least 0.2 millimeter, preferably by about 0.4 mm millimeter (edge to edge).

The second axial plane 93 passes through the micro-optical element 91a and a micro-optical element numbered 91c. In this example, the second axial plane 93 passes through the micro-optical axis Cm of the micro-optical elements 91a, 91c. The micro-optical element 91a is spaced from the micro-optical element 91c by at least 1 millimeter, preferably by about 1.4 millimeters (edge to edge).

In this second example, similarly to the first example, the shape (i.e. the geometrical properties) of the micro-optical faces of the micro-optical elements 91 are defined with reference to a reference radial plane (not shown) perpendicular to the micro-optical axis of the considered micro-optical element. Each micro-optical reference radial plane is tangential to the virtual macro-optical front face and, thus, passes through a local apex of the virtual macro-optical front face. Consequently, there are as many micro-optical reference radial planes as micro-optical elements 91. It is defined a first orthogonal frame of reference ($O_3$, $x_3$, $y_3$, $z_3$) where:

- axis $x_3$ is comprised in the micro-optical reference radial plane and in the first axial plane 92 (a value given along the axis $x_3$ pertains to a second distance),
- axis $y_3$ is comprised in the reference radial plane and is perpendicular to axis $x_3$,
- axis $z_3$ is, as consequence, parallel to the micro-optical axis Cm_a and perpendicular to the reference radial plane (a value given along the axis $z_3$ pertains to a first distance),
- origin $O_3$ is placed between the micro-optical element 91a under consideration and an adjacent micro-optical element 91d whose micro-optical axis passes through the first axial plane 92, the micro-optical element 91a being between the micro-optical elements 91b and 91d.

It is defined a second orthogonal frame of reference ($O_4$, $x_4$, $y_4$, $z_4$) where:

- axis $x_4$ is comprised in the micro-optical reference radial plane and in the second axial plane 93 (a value given along the axis $x_4$ pertains to a fourth distance),
- axis $y_4$ is comprised in the reference radial plane and is perpendicular to axis $x_4$,
- axis $z_4$ is, as consequence, parallel to the micro-optical axis Cm_a and perpendicular to the reference radial plane (a value given along the axis $z_4$ pertains to a third distance),
- origin $O_3$ is placed between the micro-optical element 91a under consideration and an adjacent micro-optical element 91e whose micro-optical axis passes through the second axial plane 93, the micro-optical element 91a being between the micro-optical elements 91c and 91e.

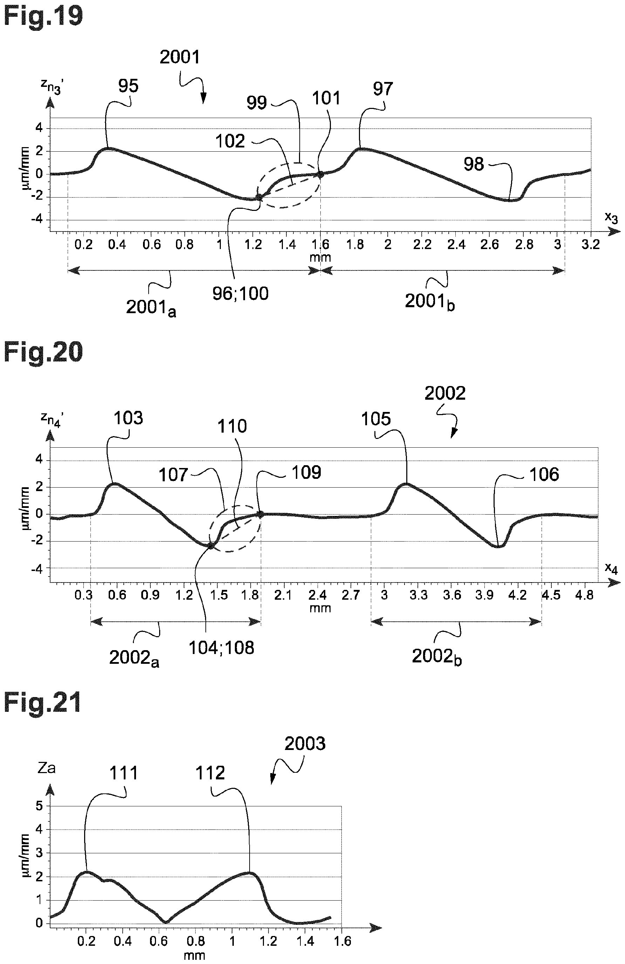

It will be described with reference to figures 19 to 28 geometrical features of the micro-optical faces of the micro-optical elements 91a, 91b, 91c.
The measures disclosed below are computed similarly to the first example.

First order dimensions of the micro-optical faces of the micro-optical elements covered by a coating

In the examples disclosed with reference to figures 19 to 23, the measurements are carried out by considering a coating (for example a hard coating and/or an anti-reflective coating, and/or an Ultraviolet protective coating, etc.) positioned on the arrangement of micro-optical elements, said coating having a thickness comprised between 100 nm and 10 $\mu$m, for instance of 250 nm or 3$\mu$m.
The altitude first order gradient considered in the first axial plane 92 is referred to as first altitude first order gradient. The altitude first order gradient considered in the second axial plane 93 is referred to as second altitude first order gradient.
Figure 19 shows a graphical representation 2001 of the first altitude first order gradient of the section of a part of the front face of the spectacle lens comprising the micro-optical elements 91a, 91b in the first axial plane 92. The graphical representation 2001 is referred to as first gradient curve 2001 having in abscissa the value $x_3$ and in ordinate the value $z_{n3}'$.
The first gradient curve 2001 comprises:

- a first part 2001a corresponding to the first altitude first order gradient of the micro-optical face 94a of the micro-optical element 91a in the first axial plane 92, and
- a second part 2001b corresponding to the first altitude first order gradient of the micro-optical face 94b of the micro-optical element 91b in the first axial plane 92

As previously, the first altitude first order gradient of the micro-optical face 94a, 94b of the micro-optical element 91a, 91b is, respectively, the first order derivative of the net first altitude (defined as above with respect to the micro-optical reference radial plane defined for each micro-optical element) of each point of the section of the micro-optical face 94a, 94b of the micro-optical element 91a, 91b in the first axial plane 92, as a function of the abscissa $x_3$ of the considered point of the section. It is understood that the abscissa along axis $x_3$ of the considered point of the section of the micro-optical faces 94a, 94b is the distance from this point to the reference axis $z_3$ (which is contained within the first axial plane 92 and parallel to the micro-optical axis Cm_a of the micro-optical element 91a).
The first part 2001a of the first gradient curve 2001 presents a maximum 95 higher than 1.5 $\mu$m/mm and a minimum 97 higher than 1.5 $\mu$m/mm in absolute value or lower than -1.5 $\mu$m/mm.
The first part 2001a of the first gradient curve 2001 comprises a sub-part 99 defined between a minimum point 100 of the first part 2001a of the first gradient curve 2001 and a zero point 101 of the first part 2001a of the first gradient curve 2001. In this example, the minimum 100 defining the first sub-part 99 is similar to the minimum 96 of the first part 1001a of the first gradient curve 2001. The point zero 101 defining the sub-part 99 corresponds to a zero value of the first part 2001a of the first gradient curve. On figure 19, a segment 102 is defined between the minimum point 100 and the zero point 101 of the sub-part 99. The sub-part 99 is positioned above the segment 102.

The second part 2001a of the first gradient curve 2001 presents a maximum 97 higher than 1.5 $\mu$m/mm and a minimum 98 higher than 1.5 $\mu$m/mm in absolute value or lower than -1.5 $\mu$m/mm. The second part 2001a follows a similar variation as the first part 2001a of the first gradient curve 2001.

Typically, in the first axial plane 92, the maximum of the first altitude first order gradient of the micro-optical shape of a micro-optical element differs by at least 0.01 $\mu$m/mm (and by less than 0.40 $\mu$m/mm) from the maximum of the first altitude first order gradient of the micro-optical shape of an adjacent micro-optical element, for instance a micro-optical element spaced by less than 0.5 mm from an adjacent micro-optical element. Here, the maximum 95 of the first part 2001a of the first gradient curve 2001 differs by 0.01 $\mu$m/mm in absolute value from the maximum 97 of the second part 2001b of the first gradient curve 2001.

Typically, in the first axial plane 92, the minimum of the first altitude first order gradient of the micro-optical shape of a micro-optical element differs by at least 0.01 $\mu$m/mm (and by less than 0.40 $\mu$m/mm) in absolute value from the minimum of the first altitude first order gradient of the micro-optical shape of an adjacent micro-optical element. Here, the minimum 96 of the first part 2001a of the first gradient curve 2001 differs by 0.06 $\mu$m/mm in absolute value (-0.06 $\mu$m/mm) from the minimum 98 of the second part 2001b of the first gradient curve 2001.

Figure 20 shows a graphical representation 2002 of the second altitude first order gradient of the section of a part of the front face of the spectacle lens comprising the micro-optical elements 91a, 91c in the second axial plane 93. The graphical representation 2002 is referred to as second gradient curve 2002 having in abscissa the value $x_4$ and in ordinate the value $z_{n4}'$ as explained above.

The second gradient curve 2002 comprises:

- a first part 2002a corresponding to the second altitude first order gradient of the micro-optical face of the micro-optical element 91a in the second axial plane 93, and
- a second part 2002b corresponding to the second altitude first order gradient of the micro-optical face of the micro-optical element 91c in the second axial plane 93.

The second altitude first order gradient of the micro-optical face of the micro-optical element 91a, 91c is, respectively, the first order derivative of the net second altitude (defined as above with respect to the micro-optical reference radial plane defined for each micro-optical element) of each point of the section of the micro-optical face of the micro-optical element 91a, 91c in the second axial plane 93, as a function of the abscissa $x_4$ of the considered point. It is understood that the abscissa along axis $x_4$ of the considered point of the section of the micro-optical faces 94a, 94c is the distance of this point to the reference axis $z_4$ (which is contained within the second axial plane 93 and parallel to the micro-optical axis Cm_a of the micro-optical element 91a).The first part 2002a of the second gradient curve 2002 presents a maximum 103 higher than 1.5 $\mu$m/mm and a minimum 104 higher than 1.5 $\mu$m/mm in absolute value or lower than -1.5 $\mu$m/mm.

The first part 2002a of the second gradient curve 2002 comprises a sub-part 107 defined between a minimum point 108 of the first part 2002a of the second gradient curve 2002 and a zero point 109 of the first part 2002a of the second gradient curve 2002. In this example, the minimum 108 defining the first sub-part 107 is similar to the minimum 104 of the first part 2002a of the second gradient curve 2002. The point zero 109 defining the sub-part 107 corresponds to a zero value of the first part of the second gradient curve 2002. On figure 20, a segment 110 is defined between the minimum point 108 and the zero point 109 of the sub-part 107. The sub-part 107 of the second gradient curve 2002 is positioned above the segment 110.

The second part 2002b of the second gradient curve 2002 presents a maximum 105 higher than 1.5 $\mu$m/mm and a minimum 106 higher than 1.5 $\mu$m/mm in absolute value or lower than -1.5 $\mu$m/mm. The second part 2002b follows a similar variation as the first part 2002a.

Typically, in the second axial plane 93, the maximum of the second altitude first order gradient of the micro-optical shape of a micro-optical element differs by at least 0.01 $\mu$m/mm (and by less than 0.40$\mu$m/mm) from the maximum of the second altitude first order gradient of the micro-optical shape of an adjacent micro-optical element, for instance a micro-optical element spaced by less than 1.5 mm from another micro-optical element. Here, the maximum 103 of the first part 2002a of the second gradient curve 2002 differs by 0.04 $\mu$m/mm in absolute value from the maximum 105 of the second part 2002b of the second gradient curve 2002.

Typically, in the second axial plane 93, the minimum of the second altitude first order gradient of the micro-optical shape of a micro-optical element differs by at least 0.01 $\mu$m/mm (and by less than 0.040 $\mu$m/mm) in absolute value from the minimum of the second altitude first order gradient of the micro-optical shape of an adjacent micro-optical element. Here, the minimum 104 of the first part 2002a of the second gradient curve 2002 differs by 0.08 $\mu$m/mm in absolute value from the minimum 106 of the second part 2002b of the second gradient curve 2002.

Table III summarizes the differences between the maximum and the minimum of parts 2001a and 2002a of the first and second gradient curves for the micro-optical element 91a that is covered by a coating.

Table III

| | spectacle lens 90 covered by a coating | | |
| --- | --- | --- | --- |
| | Micro-optical element 91a | | Differencies in absolut term ($\mu$m/mm) |
| | measurement in the first axial plane 92 | measurement in the second axial plane 93 | |
| maximum of the altitude first order gradient ($\mu$m/ mm) | 2,19 | 2,27 | 0,08 |
| minimum of the altitude first order gradient ($\mu$m/ mm) | -2,18 | -2,27 | 0,09 |

The differences between the maximum 95 of the first part 2001a of the first gradient curve 2001 and the maximum 103 of the first part 2002a of the second gradient curve 2002 is lower than 5 %.

The differences between the minimum 96 of the first part 2001a of the first gradient curve 2001and the minimum 104 of 103 of the first part 2002a of the second gradient curve 2002 is lower than 5 %.

It will be described with reference to figure 21 features of the micro-optical face of the micro-optical element 91a in the first axial plane 92 and in the second axial plane 93.

Figure 21 shows a graphical representation 2003 of a conventional norm of altitude first order gradient of the micro-optical face of the micro-optical element 91a in the first and second axial planes. The graphical representation is referred to as curve 2003 of a conventional norm of altitude first order gradient of the micro-optical shape of the micro-optical element 91a.

The curve 2003 has two maxima computed for the micro-optical element 91a, called respectively first maximum 111 and second maximum 112. The first maximum 111 and the second maximum 112 of the curve 2003 are higher than 2,00 $\mu$m/mm in absolute value. Specifically, the first maximum 111 is of 2.24 $\mu$m/mm and the second maximum 112 is of 2.18 $\mu$m/mm. It means that in this example, the first maximum 11 of the curve 2003 of the conventional norm of the altitude first order gradient differs by less of 10 % from the second maximum 112 of the curve 2003 of the conventional norm of the altitude first order gradient.

Second order dimensions of the micro-optical faces of the micro-optical elements covered by a coating

As explained above, the first altitude first order gradient in the first axial plane 92 allows determining a first altitude second order gradient and the second altitude first order gradient in the second axial plane 93 allows determining a second altitude second order gradient. The first altitude second order gradient corresponds to the derivative of the first altitude first order gradient of the micro-optical face in the first axial plane 92 and the second altitude second order gradient corresponds to the derivative of the second altitude first order gradient of the micro-optical face in the second axial plane 93.

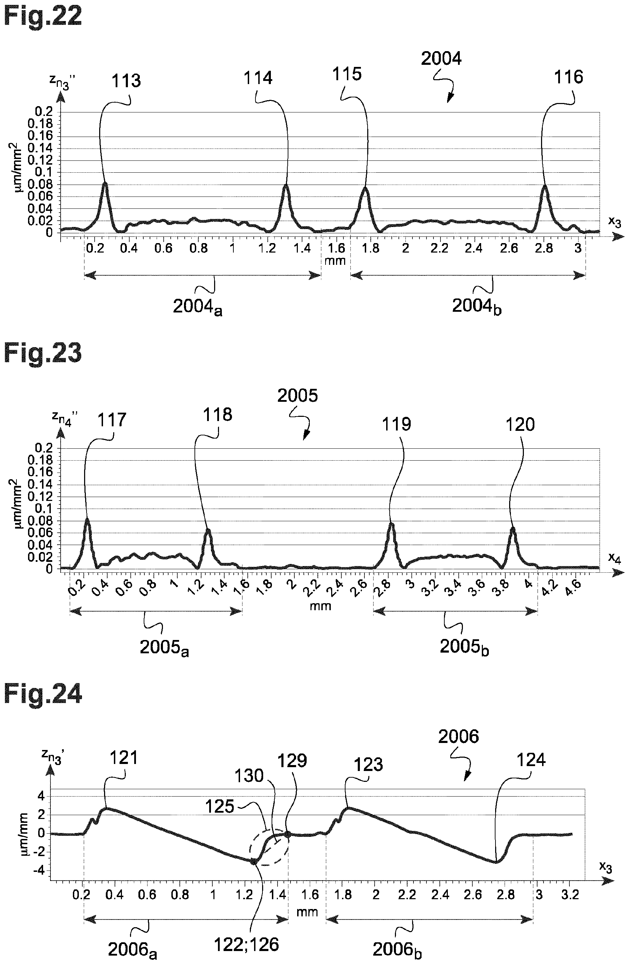

Figure 22 shows a graphical representation 2004 of the first altitude second order gradient of the section of the part of the front face of the spectacle lens comprising the micro-optical elements 91a, 91b in the first axial plane 92. The graphical representation 2004 is referred to as first gradient derivative curve 2004 having in abscissa the value $x_3$ and in ordinate the value $z_{n3}''$ as explained above.

The first gradient derivative curve 2004 comprises:

- a first part 2004a corresponding to the first altitude second order gradient obtained for the micro-optical face of the micro-optical element 91a in the first axial plane 92, and
- a second part 2004b corresponding to the first altitude second order gradient obtained for the micro-optical face of the micro-optical element 91b in the first axial plane 92.

The first altitude second order gradient of the micro-optical face of the micro-optical element 91a, 91b is, respectively, the second order derivative of the net first altitude (defined as above with respect to the micro-optical reference radial plane) of each point of the section of the micro-optical face of the micro-optical element 91a, 91b in the first axial plane 92, as a function of the abscissa $x_3$ of the considered point. It is understood that the abscissa along axis

$x_3$ of the considered point of the section of the micro-optical faces 94a, 94b is the distance from this point to the reference axis $z_3$ (which is contained within the first axial plane 92 and parallel to the micro-optical axis Cm of the micro-optical element 91a).

The first part 2004a of the first gradient derivative curve 2004 presents a first pair of maxima, respectively numbered 113 and 114. Each maximum 113, 114 of the first pair of maxima presents a value comprised between 0.070 $\mu$m/mm$^2$ and 0.090 $\mu$m/mm$^2$. Specifically, the maximum 113 of the first pair of maxima is of 0.082 $\mu$m/mm$^2$ and the maximum 114 of the first pair of maxima is of 0.080 $\mu$m/mm$^2$. The difference between the values of the maximum 113 and the maximum 114 is of 0.002 $\mu$m/mm$^2$ in absolute value.

In this example, the maximum 113 of the first pair of maxima is spaced by at least 1.0 millimeter from the maximum 114 of the first pair of maxima.

The second part 2004b of the first gradient derivative curve 2004 presents a second pair of maxima, respectively numbered 115 and 116. Each maximum 115, 116 of the second pair of maxima presents a value comprised between 0.070 $\mu$m/mm$^2$ and 0.090 $\mu$m/mm$^2$. Specifically, the maximum 115 of the second pair of maxima is of 0.074 $\mu$m/mm$^2$ and the maximum 116 of the second pair of maxima is of 0.078 $\mu$m/mm$^2$. The difference between the values of the maximum 115 and the maximum 116 is of 0.004 $\mu$m/mm$^2$ in absolute value.

In this example, the maximum 115 of the second pair of maxima is spaced by at least 1.0 millimeter from the maximum 116 of the second pair of maxima.

Figure 23 shows a graphical representation 2005 of a second altitude second order gradient of the section of the part of the front face of the spectacle lens comprising the micro-optical elements 91a, 91c in the second axial plane 93. The graphical representation is referred to as second gradient derivative curve 2005.

The second gradient derivative curve 2005 comprises:

- a first part 2005 corresponding to the second altitude second order gradient obtained for the micro-optical face of the micro-optical element 91a in the second axial plane 93, and
- a second part 2005b corresponding to the second altitude second order gradient obtained for the micro-optical face of the micro-optical element 91c in the second axial plane 93.

The second altitude second order gradient of the micro-optical face of the micro-optical element 91a, 91c is, respectively, the second order derivative of the net second altitude (defined as above with respect to the micro-optical reference radial plane) of each point of the section of the micro-optical face of the micro-optical element 91a, 91c in the second axial plane 93, as a function of the abscissa $x_4$ of the considered point. It is understood that the abscissa along axis $x_4$ of the considered point of the section of the micro-optical faces 94a, 94c is the distance of this point to the reference axis $z_4$ (which is contained within the second axial plane 93 and parallel to the micro-optical axis Cm of the micro-optical element 91a).

The first part 2005a of the second gradient derivative curve 2005 presents a first pair of maxima, respectively numbered 117 and 118. Each maximum 117, 118 of the first pair of maxima presents a value comprised between 0.060 $\mu$m/mm$^2$ and 0.090 $\mu$m/mm$^2$. Specifically, the maximum 117 of the first pair of maxima is of 0.081 $\mu$m/mm$^2$ and the maximum 118 of the first pair of maxima is of 0.066 $\mu$m/mm$^2$. The difference between the values of the maximum 117 and the maximum 118 is of 0.015 $\mu$m/mm$^2$ in absolute value.

In this example, the maximum 117 of the first pair of maxima is spaced by at least 1.0 millimeter of the maximum 118 of the first pair of maxima.

The second part 2005b of the second gradient derivative curve 2005 presents a second pair of maxima, respectively numbered 119 and 120. Each maximum 119, 120 of the second pair of maxima presents a value comprised between 0.060 $\mu$m/mm$^2$ and 0.090 $\mu$m/mm$^2$. Specifically, the maximum 119 of the second pair of maxima is of 0.077 $\mu$m/mm$^2$ and the maximum 120 of the second pair of maxima is of 0.069 $\mu$m/mm$^2$. The difference between the values of the maximum 119 and the maximum 120 is of 0.008 $\mu$m/mm$^2$ in absolute value.

In this example, the maximum 119 of the second pair of maxima is spaced by at least 1.0 millimeter from the maximum 120 of the second pair of maxima.

First order dimensions of the micro-optical faces of the micro-optical elements free of any coating on the micro-optical elements

In these examples, the method of measurement used in this part is the same as the one explained above when the micro-optical elements 91 are covered by a coating.

It will be first disclosed with reference to figure 24 the first altitude first order gradient of the section of the micro-optical faces of the micro-optical elements 91a, 91b in the first axial plane 92.

Figure 24 shows a graphical representation 2006 of the first altitude first order gradient of the section of the part of the front face of the spectacle lens comprising the micro-optical elements 91a, 91b in the first axial plane 92. The graphical representation 2006 is referred to as first gradient curve 2006 having in abscissa the value $x_3$ and in ordinate the value $z_{n3}$' as explained above.

The first gradient curve 2006 comprises:

- a first part 2006a corresponding to the first altitude first order gradient obtained for the micro-optical face of the micro-optical element 91a in the first axial plane 92, and
- a second part 2006b corresponding to the first altitude first order gradient obtained for the micro-optical face of the micro-optical element 91b in the first axial plane 92.

The first altitude first order gradient of the micro-optical face of the micro-optical element 91a, 91c is, respectively, the first order derivative of the net first altitude (defined as above with respect to the micro-optical reference radial plane) of each point of the section of the micro-optical face of the micro-optical element 91a, 91b in the first axial plane 92, as a function of the abscissa $x_3$ of the considered point of the section. It is understood that the abscissa along axis $x_3$ of the considered point of the section of the micro-optical faces 94a, 94b is the distance from this point to the reference axis $z_3$ (which is contained within the first axial plane 92 and parallel to the micro-optical axis Cm_a of the micro-optical element 91a).

The first part 2006a of the first gradient curve 2006 presents a maximum 121 and a minimum 122. The maximum 121 is higher than 2.00 $\mu$m/ mm and the minimum 122 is higher than 2.00 $\mu$m/mm in absolute value or lower than -2.00 $\mu$m/mm. Specifically, the maximum 121 is of 2.81 $\mu$m/mm and the minimum is of 2.87 in absolute value.

The first part 2006a of the first gradient curve 2006 comprises a sub-part 125 defined between a minimum point 126 of the first part 2006a of the first gradient curve 2006 and a zero point 129 of the first part 2006a of the first gradient curve 2006. In this example, the minimum 126 defining the first sub-part 125 is similar to the minimum 122 of the first part 2006a of the first gradient curve 2006 ( i.e. corresponding to a minimum of the altitude first order gradient of the micro-optical face of the micro-optical element 91a). The point zero 129 defining the sub-part 125 corresponds to a zero value of the first part 2006a of the first gradient curve 2006 (i.e. corresponding to a zero value of the first altitude first order gradient of the micro-optical face of the micro-optical element 91a). On figure 24, a segment 130 is defined between the minimum point 126 and the zero point 129 of the sub-part 125. The sub-part 125 of the first gradient curve 2006 is positioned above the segment 125.

The second part 2006b of the first gradient curve 2006 presents a maximum 123 and a minimum 124. The maximum 124 is higher than 2.00 $\mu$m/ mm and the minimum 124 is higher than 2.00 $\mu$m/mm in absolute value or lower than - 2.00 $\mu$m/mm. Specifically, the maximum 123 is of 2.89 $\mu$m/mm and the minimum 124 is of 2.98 in absolute value.

Typically, in the first axial plane 23, the maximum of the first altitude first order gradient of the micro-optical shape of a micro-optical element differs by at least 0.01 $\mu$m/mm (and by less than 0.40 $\mu$m/mm) from the maximum of the first altitude first order gradient of the micro-optical shape of an adjacent micro-optical element, typically for a micro-optical element spaced by less than 0.5 mm from an adjacent micro-optical element. Here, the maximum 121 of the first part 2006a of the first gradient curve 2006 differs by 0.08 $\mu$m/mm in absolute value from the maximum 123 of the second part 2006b of the first gradient curve 2006.

Typically, in the first axial plane 23, the minimum of the first altitude first order gradient of the micro-optical shape of a micro-optical element differs by at least 0.01 $\mu$m/mm (and by less than 0.40 $\mu$m/mm) in absolute value from the minimum of the first altitude first order gradient of the micro-optical shape of an adjacent micro-optical element. Here, the minimum 122 of the first part 2006a of the first gradient curve 2006 differs by 0.11 $\mu$m/mm in absolute value (-0.06 $\mu$m/mm) from the minimum 124 of the second part 2006b of the first gradient curve 2006.

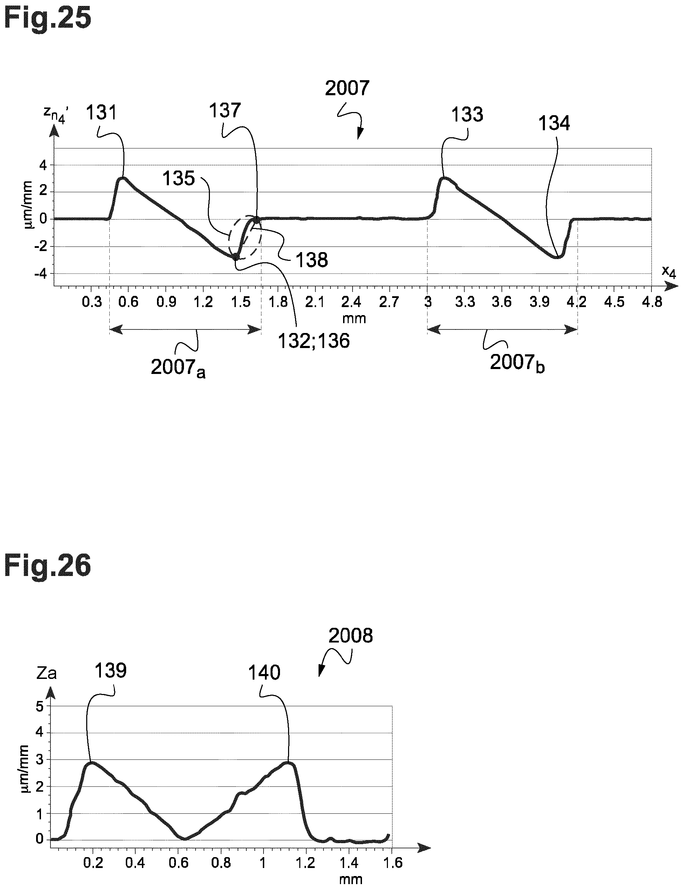

Figure 25 shows a graphical representation 2007 of a second altitude first order gradient of the section of the part of the front face of the spectacle lens comprising the micro-optical elements 91a, 91c in the second axial plane 93. The graphical representation 2007 is referred to as second gradient curve 2007 having in abscissa the value $x_4$ and in ordinate the value $z_{n4}$' as explained above.

The second gradient curve 2007 comprises:

- a first part corresponding to a variation of a second altitude first order gradient of the micro-optical face of the micro-optical element 91a computed in the second axial plane 93, and
- a first corresponding to a variation of a second altitude first order gradient of the micro-optical face of the micro-optical element 91c computed in the second axial plane 93.

The second altitude first order gradient of the micro-optical face of the micro-optical element 91a, 91c is, respectively, the first order derivative of the net second altitude (defined as above with respect to the micro-optical reference radial plane) of each point of the section of the micro-optical face of the micro-optical element 91a, 91c in the second axial plane 92, as a function of the abscissa $x_4$ of the considered point. It is understood that the abscissa along axis $x_4$ of the considered point of the section of the micro-optical faces 94a, 94c is the distance from this point to the

reference axis $z_4$ (which is contained within the second axial plane 92 and parallel to the micro-optical axis Cm of the micro-optical element 91a).

The first part of the second gradient curve 2007 presents a maximum 131 and a minimum 132. The maximum 131 is higher than 2.00 μm/mm and the minimum 132 is higher than 2.00 μm/mm in absolute value or lower than -2.00 μm/mm. Specifically, the maximum 131 is of 3.01 μm/mm and the minimum 132 is of 2.79 in absolute value.

Table IV summarizes the differences between the maximum and the minimum of the first part 2006a and 2007a of the first and second gradient curves of the micro-optical element 91a, distinguishing both cases with and without coating.

Table IV

| | spectacle lens 90 covered by a coating | | | spectacle lens 90 free of any coating | | |
|---|---|---|---|---|---|---|
| | Micro-optical element 91a | | Differencies in absolut term (μm/mm) | Micro-optical element 91a | | Differencies in absolut term (μm/mm) |
| | measurement in the first axial plane 92 | measurement in the second axial plane 93 | | measurement in the first axial plane 92 | measurement in the second axial plane 93 | |
| maximum of the first order gradient (μm/ mm) | 2,19 | 2,27 | 0,1 | 2,81 | 3,01 | 0,2 |
| minimum of the first order gradient (μm/ mm) | -2,18 | -2,27 | 0,1 | -2,87 | -2,79 | 0,08 |

It can also be seen that the coating shifts:

- the maximum of the first altitude first order gradient of 0.62 μm/mm;

- the maximum of the second altitude first order gradient of 0.74 μm/mm;

- the minimum of the first altitude first order gradient of 0.69 μm/mm (in absolute value);

- the minimum of the second altitude first order gradient of 0.52 μm/mm (in absolute value).

The second part 2007b of the second gradient curve 2007 presents a maximum 133 and a minimum 134. The maximum 133 is higher than 2.00 μm/mm and the minimum 134 is higher than 2.00 μm/mm in absolute value or lower than - 2.00 μm/mm. Specifically, the maximum 133 is of 3.05 μm/mm and the minimum 134 is of 2.85 in absolute value.

Typically, in the second axial plane 24, the maximum of the second altitude first order gradient of the micro-optical shape of a micro-optical element differs by at least 0.01 μm/mm (and by less than 0.40μm/mm) from the maximum of the second altitude first order gradient of the micro-optical shape of an adjacent micro-optical element, typically a micro-optical element spaced by less than 1.5 mm from another micro-optical element. Here, the maximum 131 of the first part 2007a of the second gradient curve 2007 differs by 0.04 μm/mm in absolute value from the maximum 133 of the second part 2007b of the second gradient curve 2007.

Typically, in the second axial plane 24, the minimum of the second altitude first order gradient of the micro-optical shape of a micro-optical element differs by less than 0.20 μm/mm in absolute value from the minimum of the second altitude first order gradient of the micro-optical shape of an adjacent micro-optical element. Here, the minimum 132 of the first part 2007a of the second gradient curve 2007 differs by 0.06 μm/mm in absolute value from the minimum 134 of the second part 2007b of the second gradient curve 2007.

On figure 25, the first part 2007a of the second gradient curve 2007 comprises a sub-part 135 defined between a minimum point 136 of the first part 2007a of the second gradient curve 2007 and a zero point 137 of the first part 2007a of the second gradient curve 2007. In this example, the minimum 136 defining the first sub-part 135 is similar to the minimum 1132 of the first part 2007a of the second gradient curve 2007 (i.e. corresponding to a minimum of the altitude first order gradient of the micro-optical face of the micro-optical element 91a). The point zero 137 defining the sub-part 135 corresponds to a zero value of the first part 2007a of the second gradient curve 2007 (i.e. corresponding to a zero value of the second altitude first order gradient of the micro-optical face of the micro-optical element 91a). On figure 25, a segment 138 is defined between the minimum point 136 and the zero point 137 of the sub-part 135. The sub-part 135 of the second gradient curve 2007 is positioned above the segment 138.

It will be described with reference to figure 26 features of the section of the micro-optical face of the micro-optical element 91a in the first axial plane 92 and second axial plane 93.

Figure 26 shows a graphical representation 2008 of a conventional norm of altitude first order gradient of the micro-optical face of a micro-optical element in the first and second axial planes. The graphical representation 2008 is referred to as curve 2008 of a conventional norm of altitude first order gradient.

On figure 26, the curve 2008 of the norm of the altitude first order gradient computed for the micro-optical element 91a has two maxima, called respectively first maximum 139 and second maximum 140. The first maximum 139 and the second maximum 140 of the curve 2008 are higher than 2,50 $\mu$m/mm in absolute value, here higher than 2.80 $\mu$m/mm. Specifically, the first maximum 139 is of 2.89 $\mu$m/mm and the second maximum 140 is of 2.88 $\mu$m/mm. It means that in this example, the first maximum 139 of the curve 2008 of the conventional norm of the altitude first order gradient differs by less of 10 % from the second maximum 140 of the curve 2008 of the conventional norm of the altitude first order gradient.

Second order dimensions of the micro-optical faces of the micro-optical elements free of any coating

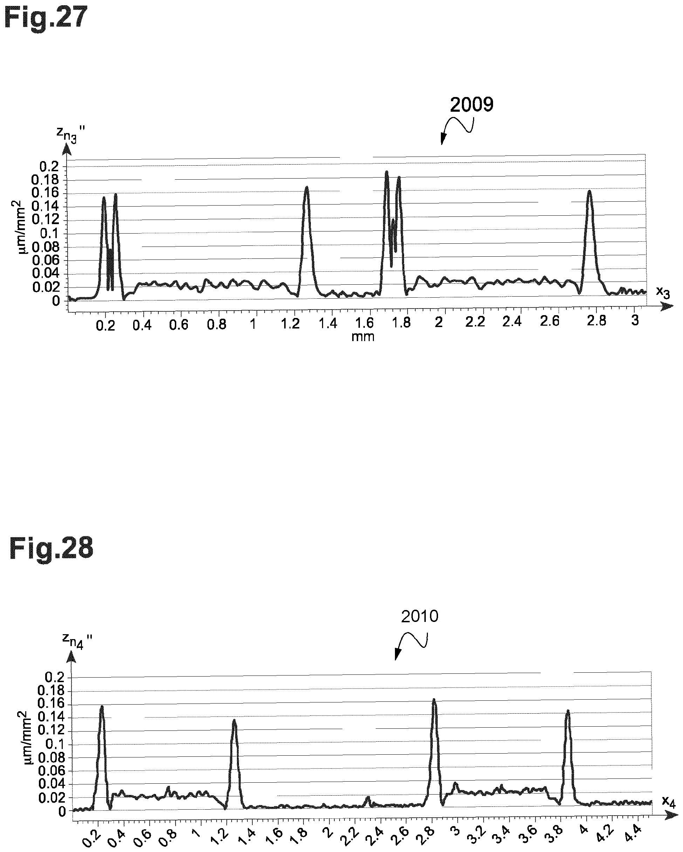

Figure 27 shows a graphical representation 2009 of the first altitude second order gradient of the section of the part of the front face of the spectacle lens comprising the micro-optical elements 91a, 91b in the first axial plane 23 and figure 27 shows a graphical representation 2010 of the first altitude second order gradient of the section of the part of the front face of the spectacle lens comprising the micro-optical elements 91a, 91c in the second axial plane 23 when the micro-optical elements are free of any coating.

It can be seen that:

- the graphical representations 2009 presents variations nearly identical to the variations of the graphical representation 2004 obtained when the micro-optical elements are covered by a coating; and
- the graphical representations 2010 presents variations nearly identical to the variations of the graphical representation 2005 obtained when the micro-optical elements are covered by a coating.

**Claims**

1. Spectacle lens (10, 90) comprising an arrangement of micro-optical elements, at least one of the micro-optical (13a, 13b, 13c, 13d, 91a, 91b, 91c) elements having a micro-optical axis (Cm) and a micro-optical face (22a, 22b, 22c, 22d), wherein

   • a maximum of a first altitude first order gradient associated to a first section ($Sa_{,23}$) of the micro-optical face being greater than 1.5 $\mu$m/mm and a minimum of the first altitude first order gradient being smaller than -1.5 $\mu$m/mm, and
   • a maximum a second altitude first order gradient associated to a second section ($Sa_{,24}$) of the micro-optical face being greater than 1.5 $\mu$m/mm and a minimum of the second altitude first order gradient being smaller than -1.5 $\mu$m/mm,
   the first section ($Sa_{,23}$) following a first axial plane (23) passing through the micro-optical axis (Cm),
   the second section ($Sa_{,24}$) following a second axial plane (24) passing through the micro-optical axis (Cm),
   the first axial plane (23) being perpendicular to the second axial plane (24).

2. Spectacle lens (10, 90) according to the claim 1,

   • the first altitude first order gradient being a gradient of first distances ($z_1$, $z_3$) associated respectively with points (37) of the first section ($Sa_{,23}$),

      each of the first distances ($z_1$, $z_3$) being:

         ○ from the point (37) associated with the first distance ($z_1$, $z_3$),
         ○ to a micro-optical reference radial plane ($21a_{,23}$, $21b_{,23}$) perpendicular to the micro-optical axis (Cm),

      the first distances ($z_1$, $z_3$) being function of respectively second distances ($x_1$, $x_3$), each of the second

distances ($x_1$, $x_3$) being

◦ from the point (37) of the first section associated with the first distance ($z_1$, Z3),
◦ to a reference axis ($z_{n1}$) parallel to the micro-optical axis (Cm) of the micro-optical element and contained within the first axial plane (23), and

• the second altitude first order gradient being a gradient of third distances ($z_2$, $z_4$), associated respectively with points (9) of the second section (Sa,24),

each of the third distances ($z_2$, $z_4$) being:

◦ from the point of the second section associated with the third distance ($z_2$, Z4),
◦ to the micro-optical reference radial plane (21a,24),

the third distances ($z_2$, $z_4$) being function of respectively fourth distances ($x_2$, $x_4$), each of the fourth distances ($x_2$, $x_4$) being

◦ from the point associated with the third distance ($z_2$, $z_4$)
◦ to a reference axis parallel to the micro-optical axis of the micro-optical element and contained within the second axial plane (24).

3. Spectacle lens (10, 90) according to claim 1 or 2, wherein the maximum (29, 31, 62, 64, 95, 97, 121, 123) of the first altitude first order gradient differs from the minimum (30, 32, 63, 65, 96, 98, 122, 124) of the first altitude first order gradient by less than 35 percent in absolute value.

4. Spectacle lens (10, 90) according to any one of claims 1 and 3, wherein the maximum 40, 42, 70, 76, 103, 105, 131, 133) of the second altitude first order gradient differs from the minimum (41, 43, 71, 77, 104, 106, 132, 134) of the second altitude first order gradient by less than 50 percent in absolute value.

5. Spectacle lens (10, 90) according to any one of claims 1 to 4, wherein the maximum (29, 31, 62, 64, 95, 97, 121, 123) of the first altitude first order gradient and the maximum (40, 42, 70, 76, 103, 105, 131, 133) of the second altitude first order gradient are comprised between 1.5 $\mu$m/mm and 10 $\mu$m/mm in absolute value, for example between 1.5 $\mu$m/mm and 4.5 $\mu$m/mm in absolute value.

6. Spectacle lens (10, 90) according to any one of claims 1 to 5, wherein the minimum (30, 32, 63, 65, 96, 98, 122, 124) of the first altitude first order gradient and the minimum (41, 43, 71, 77, 104, 106, 132, 134) of the second altitude first order gradient are comprised between 1.5 $\mu$m/mm and 10 $\mu$m/mm in absolute value, for example between 1.5 $\mu$m/mm and 5 $\mu$m/mm in absolute value.

7. Spectacle lens (10, 90) according to any one of claims 1 to 6, wherein the maximum (29, 31, 62, 64, 95, 97, 121, 123) of the first altitude first order gradient differs by 6 to 40 percent from the maximum (40, 42, 70, 76, 103, 105, 131, 133) of the second altitude first order gradient in absolute value.

8. Spectacle lens (10, 90) according to any one of claims 1 to 7, wherein the minimum (30, 32, 63, 65, 96, 98, 122, 124) of the first altitude first order gradient differs by 6 to 110 percent from the minimum (41, 43, 71, 77, 104, 106, 132, 134) of the second altitude first order gradient in absolute value.

9. Spectacle lens (10, 90) according to any one of claims 1 to 8, wherein the spectacle lens (10, 90) comprises a layer of coating covering the arrangement of micro-optical elements, the coating being configured to shift the first altitude first order gradient by less than 1,5 $\mu$m/mm in absolute value and the second altitude first order gradient by less than 1,5 $\mu$m/mm in absolute value.

10. Spectacle lens (10, 20) according to any one of claims 1 to 9, wherein the maximum (29, 31, 62, 64, 95, 97, 121, 123) of the first altitude first order gradient is equal between the micro-optical elements with a tolerance of 10 percent and/or the maximum (40, 42, 70, 76, 103, 105, 131, 133) of the second altitude first order gradient is equal between the micro-optical elements with a tolerance of 10 percent.

11. Spectacle lens according to any one of claims 1 to 10, wherein the minimum (30, 32, 63, 65, 96, 98, 122, 124) of the first altitude first order gradient is equal between the micro-optical elements with a tolerance of 10 percent and/or the minimum (41, 43, 71, 77, 104, 106, 132, 134) of the second altitude first order gradient is equal between the micro-optical elements with a tolerance of 10 percent.

12. Spectacle lens (10, 90) according to any one of claims 1 to 11, wherein the at least one of the micro-optical elements has an average mean optical power between 1 and 10 diopters for example between 1 and 6 diopters.

13. Spectacle lens (10, 90) according to any one of claims 1 to 11, wherein the spectacle lens comprises a central zone, the central zone has a circular or hexagonal form.
wherein the micro-optical elements are arranged according to concentric rings of micro-optical elements centered on a point located in the central zone.

14. Spectacle lens (10, 90) according to claim 13, wherein the micro-optical elements are spaced from each other by at least 0.1 millimeter.

15. Spectacle lens (10, 90) according to any one of claims 1 to 14, wherein the at least one of the micro-optical elements provides a refractive micro-optical function, a diffractive micro-optical function, or a diffusive micro-optical function.

## Fig.1

## Fig.2

## Fig.3A

**Fig.3B**

**Fig.4**

**Fig.5**

# Fig.6

# Fig.7

## Fig.8

## Fig.9

# Fig.10

# Fig.11

# Fig.12

Fig.13

Fig.14

Fig.15

Fig.16

Fig.17

Fig.18

**Fig.19**

**Fig.20**

**Fig.21**

## Fig.22

## Fig.23

## Fig.24

## Fig.25

## Fig.26

# Fig.27

# Fig.28

Europäisches Patentamt

European Patent Office

Office européen des brevets

# EUROPEAN SEARCH REPORT

Application Number

EP 22 30 6973

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/229889 A1 (HOYA LENS THAILAND LTD [TH]; QI HUA [JP]) 18 November 2021 (2021-11-18) * the whole document * & EP 4 152 081 A1 (HOYA LENS THAILAND LTD [TH]) 22 March 2023 (2023-03-22) * par. [0039], [0079], [0122] – [0124], [0146], [0157] – [0162]; figures 4-7 * | 1-6, 12-15 | INV. G02C7/02 |
| X | EP 4 083 687 A1 (HOYA LENS THAILAND LTD [TH]) 2 November 2022 (2022-11-02) * [0154] and par. [0192] – [0196]; figures 11,14,17 * | 1-11,14, 15 | |
| A | US 2016/377884 A1 (LAU MANWAI CHARIS [US] ET AL) 29 December 2016 (2016-12-29) * the whole document * | 7-11 | |
| A | US 2022/035177 A1 (UCHIDANI TAKAHIRO [JP]) 3 February 2022 (2022-02-03) * the whole document * | 5,6 | TECHNICAL FIELDS SEARCHED (IPC) G02C |
| A | WO 2021/186878 A1 (HOYA LENS THAILAND LTD [TH]; QI HUA [JP]) 23 September 2021 (2021-09-23) * the whole document * | 1 | |

The present search report has been drawn up for all claims

| Place of search | Date of completion of the search | Examiner |
|---|---|---|
| Munich | 16 May 2023 | Klein, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 30 6973

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2023

| Patent document cited in search report | | Publication date | Patent family member(s) | | Publication date |
|---|---|---|---|---|---|
| WO 2021229889 | A1 | 18-11-2021 | CN | 115485610 A | 16-12-2022 |
| | | | EP | 4152081 A1 | 22-03-2023 |
| | | | JP | WO2021229889 A1 | 18-11-2021 |
| | | | KR | 20230003018 A | 05-01-2023 |
| | | | TW | 202142927 A | 16-11-2021 |
| | | | WO | 2021229889 A1 | 18-11-2021 |
| EP 4083687 | A1 | 02-11-2022 | CN | 113050296 A | 29-06-2021 |
| | | | CN | 216210284 U | 05-04-2022 |
| | | | EP | 4083687 A1 | 02-11-2022 |
| | | | JP | WO2021131826 A1 | 01-07-2021 |
| | | | KR | 20220051008 A | 25-04-2022 |
| | | | TW | 202131020 A | 16-08-2021 |
| | | | US | 2023004024 A1 | 05-01-2023 |
| | | | WO | 2021131826 A1 | 01-07-2021 |
| US 2016377884 | A1 | 29-12-2016 | AU | 2016203870 A1 | 19-01-2017 |
| | | | CA | 2933459 A1 | 23-12-2016 |
| | | | CN | 106291978 A | 04-01-2017 |
| | | | EP | 3112925 A1 | 04-01-2017 |
| | | | HK | 1232305 A1 | 05-01-2018 |
| | | | JP | 6953115 B2 | 27-10-2021 |
| | | | JP | 2017010031 A | 12-01-2017 |
| | | | JP | 2021009422 A | 28-01-2021 |
| | | | KR | 20170000355 A | 02-01-2017 |
| | | | MX | 361506 B | 06-12-2018 |
| | | | RU | 2016124805 A | 27-12-2017 |
| | | | SG | 10201605184X A | 27-01-2017 |
| | | | TW | 201725426 A | 16-07-2017 |
| | | | US | 2016377884 A1 | 29-12-2016 |
| US 2022035177 | A1 | 03-02-2022 | CN | 112602009 A | 02-04-2021 |
| | | | EP | 3859438 A1 | 04-08-2021 |
| | | | JP | 7181306 B2 | 30-11-2022 |
| | | | JP | WO2020067028 A1 | 30-08-2021 |
| | | | US | 2022035177 A1 | 03-02-2022 |
| | | | WO | 2020067028 A1 | 02-04-2020 |
| WO 2021186878 | A1 | 23-09-2021 | CN | 114930229 A | 19-08-2022 |
| | | | EP | 4123362 A1 | 25-01-2023 |
| | | | JP | WO2021186878 A1 | 23-09-2021 |
| | | | KR | 20220100981 A | 18-07-2022 |
| | | | TW | 202136865 A | 01-10-2021 |
| | | | US | 2023113972 A1 | 13-04-2023 |
| | | | WO | 2021186878 A1 | 23-09-2021 |

EPO FORM P0459

For more details about this annex : see Official Journal of the European Patent Office, No. 12/82

**EP 4 390 518 A1**

**REFERENCES CITED IN THE DESCRIPTION**

**Patent documents cited in the description**

- US 10302962 B